# EUROPEAN PATENT APPLICATION

(11) **EP 2 634 606 A1**
(43) Date of publication of application: **04.09.2013**
(21) Application number: 11836139.3
(22) Date of filing: 20.10.2011
(51) Int. Cl.: G02B 5/08, F03G 6/00, F24J 2/10, G02B 1/10

(54) **FILM MIRROR FOR SOLAR POWER GENERATION PURPOSES AND REFLECTION DEVICE FOR SOLAR POWER GENERATION PURPOSES**

(30) Priority: 27.10.2010 JP 2010240514
(71) Applicant: Konica Minolta, Inc., Tokyo 100-7015 (JP)
(72) Inventor: MOCHIZUKI, Makoto, Hachioji-shi Tokyo 192-8505 (JP)
(74) Representative: Gille Hrabal
(86) International application number: PCT/JP2011/074222
(87) International publication number: WO 2012/057003

(57) **Abstract**

A film mirror for solar power generation purposes, which is characterized by having a hard coat layer on the outermost surface of a support for a resin, and additionally having a metallic reflective layer, wherein the hard coat layer contains a UV absorbent and comprises a resin cured by a process involving a heating step; and a reflection device for solar power generation purposes.

## Description

### Technical Field

The invention relates to a film mirror for solar thermal power generation and also to a reflecting device produced therewith for solar thermal power generation.

### Background Art

In recent years, natural energy such as biomass energy, wind energy, or solar energy has been studied as an alternative to fossil fuel energy such as petroleum or natural gas energy, and now, solar energy is thought to be most stable and abundant natural energy that can be substituted for fossil fuel energy. However, solar energy, which is highly promising alternative energy, seems to have some problems with utilization, such as (1) its low energy density and (2) difficulty in storing and transferring solar energy.

Concerning these problems with solar energy, the problem of the low density of solar energy is proposed to be solved by a method of collecting solar energy with giant reflectors. Reflectors are exposed to ultraviolet light and heat from sunlight and also exposed to wind, rain, sandstorm, and the like. Thus, glass mirrors are traditionally used for reflectors. Glass mirrors are highly durable against environments, but have a problem in that they can increase the cost of building a plant because they can be broken during transportation and are relatively heavy, so that they need stronger mirror mounts.

On the other hand, film mirrors for solar thermal power generation are light and highly flexible and can be manufactured and transported at low cost. Film mirrors for solar thermal power generation, which are always exposed outdoor during use, must be protected from damage from sandstorm or the like and prevented from being damaged during cleaning so that their reflectance will not decrease. At the same time, the surface resin layers of film mirrors must be prevented from decreasing in hardness and discoloring such as yellowing when exposed to UV light. The problem of the decrease in reflectance or the discoloration leads to the problem of a decrease in electric generation efficiency.

Thus, film mirrors for solar thermal power generation have a problem in that they need development of techniques to form, on their outermost surface, a hard coat layer that has high hardness and is less likely to be damaged or discolored even when used in an outdoor environment for a long period of time.

It is already reported that a film mirror for solar thermal power generation has a 61 µm acrylic layer as an outermost surface layer of the film (see, for example, Patent Literature 1). However, the acrylic layer disclosed in Patent Literature 1 does not have sufficient hardness and when the mirror is placed in a desert where exposure to sunlight is high, the film surface is damaged by sandstorm or the like, so that the decrease in its reflectance cannot be prevented. In addition, sand or dirt adheres to the film to significantly pollute the film surface over time, which makes it impossible to keep its reflectance at a high level for a long period of time. At present, the surface of such a mirror is cleaned by brushing with water so that its reflectance can be kept at a high level. In this case, however, not only costs for tools and materials for the cleaning but also labor costs are necessary. For solar thermal power generation, mirrors are placed in an environment where dirt easily adheres thereto, such as a desert, and thus mirrors must be frequently cleaned. However, as the number of times of cleaning increases, mirrors become damaged and their reflectance decrease.

It is also disclosed that an acrylic hard coat layer cured by UV curing contains 15% by weight or more (against the weight of solid content of resin) of a benzotriazole-based UV absorber so that the hard coat layer can have improved weather resistance (see, for example, Patent Literature 2). After exposure to UV, however, the hard coat layer disclosed in Patent Literature 2 was significantly reduced in hardness although discoloration of the hard coat layer could be suppressed. Thus, when used for a long period of time in an outdoor environment such as a desert, such a hard coat layer of a mirror is significantly damaged by sandstorm and cleaning operations, so that the reflectance of the mirror is reduced.

There has not been proposed any film mirror being useful in solar thermal power generation and having an outermost surface layer that is less likely to be discolored or damaged even when used outdoor for a long period of time.

### Prior Art literature

### Patent Literature

Patent Literature 1: JP 2009-520174 W
Patent Literature 2: US Patent No.7, 507, 776

### Summary of Invention

### Technical Problem

It is an object of the invention, which has been accomplished in view of the above problems, to provide a film mirror for solar thermal power generation, which is light and flexible, exhibits high weather resistance and good regular reflectance to sunlight, and has an outermost surface layer that is less likely to be discolored or damaged even when used outdoor for a long period of time, and to provide a reflecting device for solar thermal power generation having such a film mirror.

### Means to Solve the Problem

The object of the invention is achieved using the structures described below.

1. A film mirror for solar thermal power generation includes a hard coat layer at an outermost surface of a transparent resin layer and a metallic reflective layer. The hard coat layer contains a UV absorber and a resin cured by a process including a heating step.

2. The film mirror for solar thermal power generation according to item 1, in which the metallic reflective layer is made of silver.

3. The film mirror for solar thermal power generation according to item 1 or 2, in which the hard coat layer is formed by a thermosetting compound composed of a polysiloxane-based compound.

4. The film mirror for solar thermal power generation according to any one of items 1 to 3, in which the UV absorber is at least one selected from a group consisting of a low-molecular-weight triazine-based UV absorber, a high-molecular-weight benzotriazole-based UV absorber, titanium oxide, zinc oxide, cerium oxide and iron oxide.

5. The film mirror for solar thermal power generation according to any one of items 1 to 4, in which the hard coat layer contains an antioxidant.

6. A reflecting device for solar thermal power generation which is manufactured by bonding the film mirror for solar thermal power generation, according to any one of items 1 to 5, to a support with a sticky layer interposed between them.

### Advantageous Effects of Invention

The invention makes it possible to provide a film mirror for solar thermal power generation which is light and flexible and has an outermost surface layer that is less likely to be discolored or damaged even when used outdoor for a long period of time, and to provide a reflecting device for solar thermal power generation having such a film mirror.

### Brief Description of Drawings

Fig. 1 is a schematic cross-sectional view showing an example of the structure of the film mirror for solar thermal power generation according to the present invention.
Fig. 2 is a schematic cross-sectional view showing another example of the structure of the film mirror for solar thermal power generation according to the present invention.

### Embodiments to Carry Out the Invention

Hereinafter, best embodiments for carrying out the invention are described in detail, which however should not represent any restriction to the invention.

As a result of diligent study, the inventors have found that a decrease in the scratch resistance of a hard coat layer during outdoor use is a phenomenon characteristic of a hard coating formed only by a UV curing process generally used and that when the hard coating is subjected to light in the UV range of sunlight, a cluster produced by re-polymerization of unreacted monomers in the hard coating is formed to cause the hard coating to undergo distortion and microcracking. It has also been found that particularly when the hard coating formed only by a UV curing process contains a UV absorber, the microcracking can significantly occur. It has also been found that when a hard coat layer is formed by a process including a heating step, microcracking is less likely to occur even with the addition of a UV absorber in an amount enough to impart weather resistance, and thus damage and adhesion of dirt can also be suppressed.

Hereinafter, each component of the film mirror for solar thermal power generation according to the invention is described in detail.

### (Structure of the Film Mirror for Solar Thermal Power Generation)

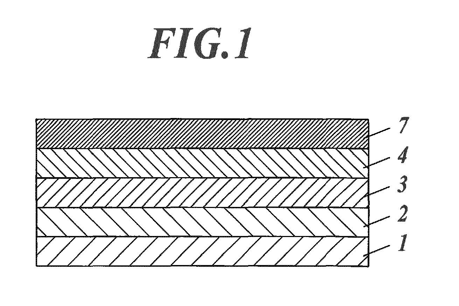

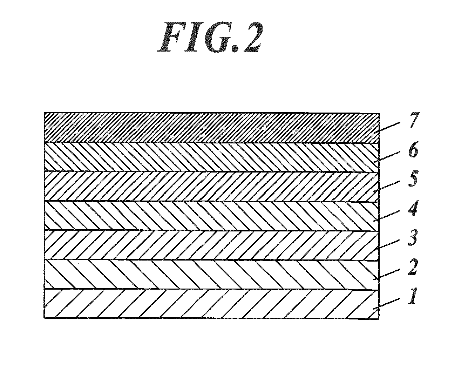

The general structure of the film mirror for solar thermal power generation according to the invention is described with reference to Figs. 1 and 2.

As shown in Fig. 1 or 2, the film mirror for solar thermal power generation 10 or 11 includes component layers which include at least a reflective layer 3 and a hard coat layer 7 at an outermost surface layer on the front side, both provided on/over (on or over) a resin substrate (base) 1. In a preferred mode, the component layers may include, as additional layers, an anchor layer 2, an anti-corrosion layer 4, an adhesive layer 5 and an acrylic resin layer 6 as a transparent (optically transparent) resin layer. In another mode, the adhesive layer 5 may be omitted.

### [Hard Coat Layer]

The film mirror for solar thermal power generation according to the invention has a hard coat layer as an outermost surface layer. The hard coat layer according to the invention is provided for prevention of scratches and for prevention of pollution.

The hard coat layer according to the invention can be formed, for example, using an acrylic-based resin, a urethane-based resin, a melamine-based resin, an epoxy-based resin, an organosilicate compound, a silicone-based resin, a polysiloxane-based compound or the like as a binder and formed by curing by a process including a heating step. In the invention, the binder resin is cured by a heat curing method. In the invention, however, it is also preferred to use a method including initially subjecting a UV-curable binder resin to UV curing and then performing additional heat curing. Particularly, in the invention, a silicone-based resin or a polysiloxane-based compound as a thermosetting binder is preferably cured only by heat curing in view of hardness, durability, and other properties. A polysiloxane-based compound is particularly preferred. When the binder is cured by a process including performing UV curing and then additional heat curing, an acrylic-based resin is preferably used in view of hardness, durability, and other properties. If necessary, a photo-initiator, a photo-sensitizer, a thermal polymerization initiator, a modifier or the like may also be added.

The step of heating a binder refers to the step of curing an applied binder by a treatment in an atmosphere at 40°C or higher for 1 minute or more. To form a cured resin layer with a sufficient crosslink density, it is necessary to perform a treatment in an atmosphere at 40 to 150°C for 1 minute to several days. The layer is preferably allowed to stand in an atmosphere at 60°C to 100°C for 30 minutes to 2 days so that it can have a sufficient hardness.

Thermosetting resins that may be used include polysiloxane-based compounds, silicone-based resins or silicone-modified resins, acrylic-based resins, phenol-based resins, epoxy-based resins, polyester-based resins, polyurethane-based resins, melamine-based resins, and urea-based resins. In the invention, silicone-based resins, silicone-modified resins, or siloxane-based compounds are preferably used, and in particular, polysiloxane-based compounds are preferably used.

Precursor compounds used to form silicone-based resins or polysiloxane-based compounds may be represented by the general formula RₘSi(OR')ₙ where R and R' each represents an alkyl group of 1 to 10 carbon atoms, and m and n each represents an integer satisfying the relation m+n=4. Examples of such precursor compounds include tetramethoxysilane, tetraethoxysilane, tetraisopropoxysilane, tetra(n-propoxy)silane, tetra(n-butoxy)silane, tetra(sec-butoxy)silane, tetra(tert-butoxy)silane, tetrapentaethoxysilane, tetrapentaisopropoxysilane, tetrapenta(n-propoxy)silane, tetrapenta(n-butoxy)silane, tetrapenta(sec-butoxy)silane, tetrapenta(tert-butoxy)silane, methyltriethoxysilane, methyltripropoxysilane, methyltributoxysilane, dimethyldimethoxysilane, dimethyldiethoxysilane, dimethylethoxysilane, dimethylmethoxysilane, dimethylpropoxysilane, dimethylbutoxysilane, dimethyldimethoxysilane, dimethyldiethoxysilane, hexyltrimethoxysilane, and the like. A silane coupling agent such as γ-(2-aminoethyl)aminopropyltrimethoxysilane, γ-(2-aminoethyl)aminopropylmethyldimethoxysilane, β-(3,4-epoxycyclohexyl)ethyltrimethoxysilane, N-β-(N-aminobenzylaminoethyl)-γ-aminopropylmethoxysilane hydrochloride, γ-glycidoxypropyltrimethoxysilane, aminosilane, methylmethoxysilane, vinyltriacetoxysilane, γ-mercaptopropyltrimethoxysilane, γ-chloropropyltrimethoxysilane, hexamethyldisilazane, vinyltris(β-methoxyethoxy)silane, octadecyldimethyl[3-(trimethoxysilyl)propyl]ammonium chloride, methyltrichlorosilane or dimethyldichlorosilane, or an ionizing radiation-curable siloxane compound may also be used. Specifically, the ionizing radiation-curable siloxane compound may be an organosilicon compound with a molecular weight of 5,000 or less having two or more functional groups, such as polymerizable double bond-containing groups, capable of undergoing a crosslinking reaction upon exposure to ionizing radiation. More specifically, the ionizing radiation-curable siloxane compound may be polysiloxane terminated at one end by a vinyl functional group, polysiloxane terminated at both ends by vinyl functional groups, or vinyl functional polysiloxane obtained by reaction between these compounds. The composition forms three-dimensionally cross-linkage by dehydration condensation of silanol groups to form a high-hardness coating.

The polysiloxane-based compound may be a reaction product obtained by hydrolysis reaction of at least one compound selected from silane compounds represented by general formula (0) below and is a polymer having three-dimensional siloxane linkages. Such a polymer preferably has a weight average molecular weight of 1,000 to 3,000.

General formula (0): R₄-ₙSi(oR')ₙ

where R represents a hydrogen atom, an alkyl group, or a phenyl group, R' represents an alkyl group or a phenyl group and n represents an integer of 2 to 4.)
The silicone-modified resin may be a graft copolymer having a silicone side chain. Such a resin is preferably an acrylic graft copolymer having a silicone side chain. The silicone graft copolymer can be produced by radical polymerization of an acrylic modified silicone high-molecular-weight monomer and a radically-polymerizable monomer. The acrylic modified silicone may be a product obtained by condensation of a silicone represented by general formula (1) below and an acrylic compound represented by general formula (2) below.

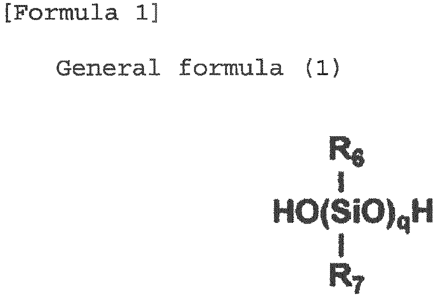

In the formula, R₆ and R₇ each represent a monovalent aliphatic hydrocarbon group of 1 to 10 carbon atoms, a phenyl group, or a monovalent halogenated hydrocarbon group, and q is a positive number of 1 or more.

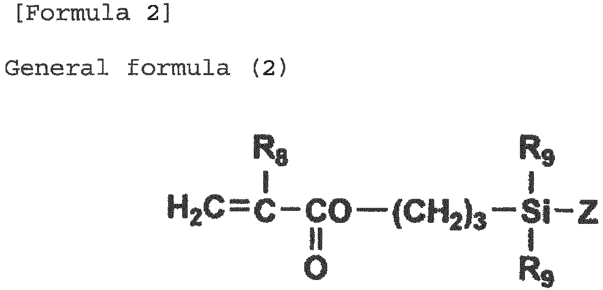

and/or

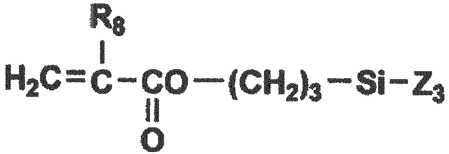

In the formula, R₈ represents a hydrogen atom or a methyl group, R₉ represents a methyl group, an ethyl group or a phenyl group, both of R₉ may be the same or different and Z represents a chlorine atom, a methoxy group or an ethoxy group.

The polysiloxane-based compound or the silicone represented by general formula (1) is commercially available, and commercially available products suitable for intended purpose can be used. In general formula (1), R₆ and R₇ each represent a monovalent aliphatic hydrocarbon group of 1 to 10 carbon atoms, a phenyl group or a monovalent halogenated hydrocarbon group. For example, the monovalent aliphatic hydrocarbon group of 1 to 10 carbon atoms may be methyl, ethyl, acyl or the like. For example, the monovalent halogenated hydrocarbon group may be 3,3,3-trifluoropropyl, 4,4,4-trifluoro-3,3-difluorobutyl, 2-chloroethyl or the like. In particular, R₆ and R₇ are each preferably methyl.

In general formula (1), q is a positive number of 1 or more. In general, an oily product tends to be obtained by copolymerization of a radically-polymerizable monomer and the acrylic modified silicone derived from the silicone with such a high molecular weight that the number of q is 100 or more. In general, various types of products such as oily, gelatinous, and solid products can be obtained, depending on the type of the monomers used, by copolymerization of a radically-polymerizable monomer and the acrylic modified silicone derived from the silicone with such a low molecular weight that the number of q is 100 or less.

Examples of the acryl-silane compound represented by general formula (2) include γ-methacryloxypropyldimethylchlorosilane, γ-methacryloxypropyldimethylethoxysilane, γ-methacryloxypropyldiphenylchlorosilane, γ-acryloxypropyldimethylchlorosilane, γ-methacryloxypropyltriethoxysilane, γ-methacryloxypropyltrichlorosilane and the like. These acryl-silane compounds can be easily obtained by reaction of a silicon compound with a compound having an aliphatic multiple bond under the presence of platinic chloride according to a method as disclosed in JP 33-9969 B, for example.

The polysiloxane-based compound can be produced using a conventionally known method, such as a heat polymerization method. This method can produce a polymer having three-dimensional siloxane linkages, which are formed using the reactive group of polysiloxane such as a silanol group as a crosslinking site.

The radical polymerization of the acrylic modified silicone and the radically-polymerizable monomer can be performed using a conventionally known method, such as an irradiation method or a method using a radial polymerization initiator. The copolymerization may also be performed by an ultraviolet irradiation method using a known sensitizer as a radial polymerization initiator. The copolymerization may also be performed by an electron beam irradiation method, and in this case, there is no need to use a radial polymerization initiator. The silicone copolymer obtained as described above is a comb-shaped graft copolymer including a radically-polymerizable monomer-derived backbone and a silicone branch.

The polysiloxane-based compoundmaybe SARCoat NP-730 and SARCoat NP-720 (all manufactured by DOKEN CO., LTD.) and OCD T7, OCD T11, and OCD T12 (all manufactured by Tokyo Ohaka Kogyo Co., Ltd.).
Examples of commercially available silicone copolymers include Cymac US-150, US-270, US-350, US-450, and Rezeda GP-700 (all manufactured by Toagosei Co., Ltd.).

Examples of the UV-curable resin include (meth)acrylate resins composed mainly of trimethylolpropane tri(meth)acrylate, trimethylolpropane tris(hydroxyethyl (meth)acrylate), tris(2-hydroxyethyl)isocyanurate tri(meth)acrylate, pentaerythritol tri(meth)acrylate, pentaerythritol tetra(meth)acrylate, dipentaerythritol hexa(meth)acrylate, polyfunctional urethane (meth)acrylate, or the like. As used herein, the term "polyfunctional urethane (meth) acrylate" refers to a compound having a urethane bond and at least two (meth)acryloyl groups, for example, which is obtained by addition reaction of a polyisocyanate having at least two isocyanato (-NCO) groups in its molecule, such as isophorone diisocyanate or hexamethylene diisocyanate, with a compound having one hydroxyl group and at least one (meth)acryloyl group in its molecule, such as trimethylolpropane di(meth)acrylate or pentaerythritol tri(meth)acrylate. These ultraviolet ray-curable resins may be used alone or in combination of two or more. The polyfunctional urethane (meth)acrylate may also be used in combination with the above polyfunctional (meth)acrylate having no urethane bond.

Commercially available UV-curable resins are advantageously used. Examples of commercially available UV-curable resins include KAYARAD DPHA (manufactured by Nippon Kayaku Co., Ltd.), KAYARAD DPCA-20 (manufactured by Nippon Kayaku Co., Ltd.), KAYARAD DPCA-30 (manufactured by Nippon Kayaku Co., Ltd.), KAYARAD DPCA-60 (manufactured by Nippon Kayaku Co., Ltd.), KAYARAD DPCA-120 (manufactured by Nippon Kayaku Co., Ltd.), KAYARAD D-310 (manufactured by Nippon Kayaku Co., Ltd.), KAYARAD D-330 (manufactured by Nippon Kayaku Co., Ltd.), KAYARAD PET-30 (manufactured by Nippon Kayaku Co. , Ltd.), KAYARAD GPO-303 (manufactured by Nippon Kayaku Co., Ltd.), KAYARAD TMPTA (manufactured by Nippon Kayaku Co., Ltd.), KAYARAD THE-330 (manufactured by Nippon Kayaku Co., Ltd.), KAYARAD TPA-330 (manufactured by Nippon Kayaku Co., Ltd.), ARONIX M-315 (manufactured by Toagosei Co., Ltd.), and ARONIX M-325 (manufactured by Toagosei Co., Ltd.).

The UV-curable resin such as any of the above is used usually as a mixture with a photopolymerization initiator. The photopolymerization initiator to be used is preferably a commercially available product such as IRGACURE 907 (Ciba Japan K.K.), IRGACURE 184 (Ciba Japan K.K.), or Lucirin TPO (manufactured by BASF Japan Ltd.).

Silica fine particles may also be added to the UV-curable resin so as to obtain a hard coat layer that has sufficiently high hardness and can sufficiently suppress curling induced by curing shrinkage. In this case, the silica fine particles may be powdered silica or colloidal silica, and silica fine particles with an average particle size in the range of 0.01 to 20 µm are advantageously used. The silica fine particles preferably do not affect the optical transparency of the hard-coated film. Thus, silica fine particles preferably have primary particle sizes in the range of 10 to 350 nm and more preferably in the range of 10 to 50 nm. For example, the average particle size of the silica fine particles can be determined by observation with a transmission electron microscope. Alternatively, primary particle sizes of the silica fine particles can be determined by a process including dispersing the fine particles in a solvent such as isopropyl alcohol and measuring the sizes of the particles in the dispersion by Coulter particle size distribution analysis, laser diffraction/scattering method, dynamic light scattering method or the like. In particular, Coulter particle size distribution analysis is commonly used.

The shape of the silica fine particles may be spherical, hollow, porous, rod-like, plate-like, fibrous or infinite. The particles are preferably spherical so that they can be well dispersed in the ultraviolet-curable resin without forming aggregates. In order to maintain the hardness and flatness of the hard coat layer, the silica fine particles preferably have a specific surface area in the range of 0.1 to 3,000 m²/g, more preferably 1 m²/g or more, in particular, 10 m²/g or more, and more preferably 1,500 m²/g or less.

Commercially available products can also be advantageously used as the silica fine particles. Examples of commercially available silica fine particles include colloidal silica products such as Methanol Silica Sol (manufactured by Nissan Chemical Industries, Ltd.), IPA-ST (manufactured by Nissan Chemical Industries, Ltd.), MEK-ST (manufactured by Nissan Chemical Industries, Ltd.), NBA-ST (manufactured by Nissan Chemical Industries, Ltd.), XBA-ST (manufactured by Nissan Chemical Industries, Ltd.), DMAC-ST (manufactured by Nissan Chemical Industries, Ltd.), ST-UP (manufactured by Nissan Chemical Industries, Ltd.), ST-OUP (manufactured by Nissan Chemical Industries, Ltd.), ST-20 (manufactured by Nissan Chemical Industries, Ltd.), ST-40 (manufactured by Nissan Chemical Industries, Ltd.), ST-C (manufactured by Nissan Chemical Industries, Ltd.), ST-N (manufactured by Nissan Chemical Industries, Ltd.), ST-O (manufactured by Nissan Chemical Industries, Ltd.), ST-50 (manufactured by Nissan Chemical Industries, Ltd.), and ST-OL (manufactured by Nissan Chemical Industries, Ltd.). Examples of powdered silica products include AEROSIL 130 (manufactured by Nippon Aerosil Co., Ltd.), AEROSIL 300 (manufactured by Nippon Aerosil Co., Ltd.), AEROSIL 380 (manufactured by Nippon Aerosil Co. , Ltd.), AEROSIL TT600 (manufactured by Nippon Aerosil Co., Ltd.), AEROSIL OX50 (manufactured by Nippon Aerosil Co. , Ltd.), SILDEX H31 (manufactured by Asahi Glass Co., Ltd.), SILDEX H32 (manufactured by Asahi Glass Co., Ltd.), SILDEX H51 (manufactured by Asahi Glass Co., Ltd.), SILDEX H52 (manufactured by Asahi Glass Co., Ltd.), SILDEX H121 (manufactured by Asahi Glass Co., Ltd.), SILDEX H122 (manufactured by Asahi Glass Co., Ltd.), E220A (manufactured by Nippon Silica Industrial Co., Ltd.), E220 (manufactured by Nippon Silica Industrial Co., Ltd.), Sylysia 470 (manufactured by Fuji Silysia Chemical Ltd.), and SG Flake (Nippon Sheet Glass Co., Ltd.).

### <Leveling Agent>

In the invention, a leveling agent may be added to a curable composition for use in forming the hard coat layer so as to ensure high surface smoothness of the hard coat layer. The reveling agent refers to a chemical agent that is effective in reducing the surface tension of a coating composition when added thereto and effective in improving the surface smoothness of the coating.

Leveling agents commonly used include polyacrylate-based polymers such as poly(alkyl acrylate); polyvinyl ether-based polymers such as poly (alkyl vinyl ether) ; and silicone-based polymers such as dimethylpolysiloxane, methylphenylpolysiloxane, and organic modified polysiloxane having an introduced moiety such as a polyether, polyester, or aralkyl moiety. In the invention, any of these polymers can be used as a leveling agent when having a fluorine atom(s). For example, such a fluorine atom-containing leveling agent can be obtained by copolymerization of a monomer having a fluorine-containing group.

Examples of commercially available leveling agents include Surflon "S-381", "S-382", "SC-101", "SC-102", "SC-103", and "SC-104" (all manufactured by Asahi Glass Co., Ltd.), Fluorad "FC-430", "FC-431", and "FC-173" (all manufactured by Du Pont-Mitsui Fluorochemical Co., Ltd.-Sumitomo 3M Limited), F-top "EF 352", "EF 301", and "EF 303" (all manufactured by Shin-Akita Kasei Co. Ltd.), SchwegoFluor "8035" and "8036" (all manufactured by Schwegman), "BM1000" and "BM1100" (all manufactured by BM Chemie), MEGAFAC "F-171", "F-470", "RS-75", and "RS-72-K" (all manufactured by DIC Corporation), BYK-340 (manufactured by BYK Japan KK), and "ZX-049", "ZX-001", and "ZX-017" (all manufactured by Fuji Kasei Industries Ltd.).

In the invention, the fluorine atom-containing leveling agent is preferably contained in the hard coat layer at the outermost surface. If the curable composition contains the leveling agent less than 0.1% by weight with respect to the solid content of the composition, the hard coat layer can have insufficient water repellency and insufficient anti-pollution properties, which is not preferred. If the curable resin composition contains the leveling agent more than 10% by weight with respect to the solid content of the composition, the resulting hardness can be insufficient, which is not preferred. The hard coat layer at the outermost surface preferably contains the leveling agent 0.5% by weight to 5% by weight with respect to the solid content of the composition of the hard coat layer. In this case, scratch resistance and anti-pollution properties are further improved.

The hard coat layer according to the invention can be produced by a process including applying, to a resin substrate, a coating liquid including a curable composition containing the UV-curable composition and the leveling agent as described above and further containing a UV absorber and an antioxidant; and applying UV light to the coating liquid to cure the curable composition so that the hard coat layer which is a product of curing the curable composition is formed on the resin support.

In the invention, the coating liquid for forming the hard coat layer can be obtained by diluting the ionizing radiation-curable resin with at least one solvent from ethyl acetate, methyl ethyl ketone, methyl isobutyl ketone, and cyclohexanone in such a manner that the solid content of the ionizing radiation-curable resin is from 30 to 70% by weight. If the solid content of the ionizing radiation-curable resin in the coating liquid is less than 30% by weight, the solvent concentration becomes too high in the process of applying the coating liquid to the resin substrate, so that it can be difficult to obtain a coating with a thickness of 10 to 30 µm. If the solid content of the ionizing radiation-curable resin in the coating liquid is more than 70% by weight, the viscosity of the coating liquid becomes too high, so that an uneven coating with poor flatness may be formed.

### <UV Absorber>

In the invention, the curable composition for forming the hard coat layer preferably contains a UV absorber of an organic compound or a UV absorber of an inorganic compound or preferably contains both of UV absorbers of organic and inorganic compounds so that the resulting hard coat layer and underlying resin layer can have improved weather resistance. The organic UV absorber is preferably a triazine-based UV absorber.

### <Inorganic UV absorber>

The inorganic UV absorber for use in the invention is generally a metal oxide pigment, which may be a compound having the function of reducing the UV-B range (290 to 320 nm) light transmittance of a transparent resin layer to 10% or less when it is dispersed at a concentration of 20% by weight or more in the transparent resin layer to form a film of 6 µm thickness. In particular, the inorganic UV absorber usable in the invention is preferably selected from titanium oxide, zinc oxide, iron oxide, cerium oxide or mixtures thereof.

To improve the transparency of the inorganic UV absorber-containing layer, the inorganic UV absorber is preferably made of metal oxide particles having an average elementary particle size between 5 nm and 500 nm, in particular, preferably between 10 nm and 100 nm and having a particle size distribution with a maximum particle size of 150 nm or less. This type of coated or uncoated metal oxide pigment is described in more detail in Patent Application EP-A-0518773.

In the invention, preferably oxidative degradation of the resin caused by photo-catalytic activity of an adjacent inorganic oxide is to be prevented. From this point of view, the inorganic UV absorber may be surface-coated inorganic UV absorbing fine particles with an average particle size of 10 nm or more and 100 nm or less. The surface coating is more preferred because it is also effective in improving the dispersibility of the inorganic UV absorber particles. As used herein, the term "surface-coated inorganic UV absorber" refers to an inorganic UV absorber surface-treated with a compound such as amino acid, beeswax, fatty acid, fatty alcohol, anionic surfactant, lecithin, sodium salt, potassium salt, zinc salt, iron salt or aluminum salt of fatty acid, metal (titanium or aluminum) alkoxide, polyethylene, silicone, protein (collagen, elastin), alkanolamine, silicon oxide, metal oxide or sodium hexametaphosphate, or surface-treated by one or more of chemical, electronic, mechanochemical and mechanical means.

When the inorganic UV absorber is used alone, the content of the inorganic UV absorber in the UV absorbing layer may be from 1 to 30% by weight, preferably from 5 to 25% by weight and more preferably from 15 to 20% by weight with respect to the total weight of the UV absorbing layer. If the content is more than 30% by weight, the layer can have low adhesion, and if the content is less than 1% by weight, the effect of improving weather resistance can be small.

When the inorganic UV absorber is used in combination with the organic UV absorber described below, the content of the inorganic UV absorber in the UV absorbing layer may be from 3 to 20% by weight and preferably from 5 to 10% by weight, and the content of the organic UV absorber in the UV absorbing layer may be from 0.1 to 10% by weight and preferably from 0.5 to 5% by weight with respect to the total weight of the UV absorbing layer. When the inorganic and organic UV absorbers are used together within the above content range, the UV absorbing layer can have high transparency and good weather resistance.

### <Low-Molecular-Weight Triazine-based UV Absorber>

In the invention, a low-molecular-weight triazine-based UV absorber represented by general formula (I) below is preferably used.

General formula (I): Q¹-Q²-OH

In the formula, Q¹ represents a 1,3,5-triazine ring and Q² represents an aromatic ring.

The compound represented by general formula (I) is preferably a compound represented by general formula (I-A) below.

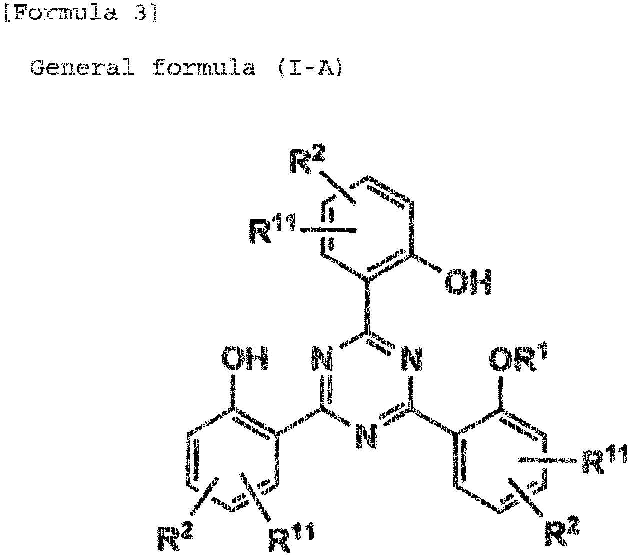

In the formula, R¹ represents a C1-C18 alkyl group; a C5-C12 cycloalkyl group; a C3-C18 alkenyl group; a phenyl group; a C1-C18 alkyl group substituted with a phenyl group, a hydroxy group, a C1-C18 alkoxy group, a C5-C12 cycloalkoxy group, a C3-C18 alkenyloxy group, a halogen atom, -COOH, -COOR⁴, -O-CO-R⁵, -O-CO-O-R⁶, -CO-NH₂, -CO-NHR⁷, -CO-N(R⁷)(R⁸), CN, NH₂, NHR⁷, -N(R⁷)(R⁸), -NH-CO-R⁵, a phenoxy group, a C1-C18 alkyl-substituted phenoxy group, a phenyl-C1-C4 alkoxy group, a C6-C15 bicycloalkoxy group, a C6-C15 bicycloalkylalkoxy group, a C6-C15 bicycloalkenylalkoxy group, or a C6-C15 tricycloalkoxy-substituted C1-C18 alkyl group; a C5-C12 cycloalkyl group substituted with a hydroxy group, a C1-C4 alkyl group, a C2-C6 alkenyl group, or -O-CO-R⁵; a glycidyl group; -CO-R⁹; or -SO₂-R¹⁰, or R¹ represents a C3-C50 alkyl group interrupted by one or more oxygen atoms and/or substituted with a hydroxy group, a phenoxy group, or a C7-C18 alkylphenoxy group, or R¹ represents one of -A; -CH₂-CH (XA) -CH₂-O-R¹²; -CR¹³R'¹³- (CH₂)ₘ-X-A; -CH₂CH(OA)-R¹⁴; -CH₂-CH (OH) -CH₂-XA;

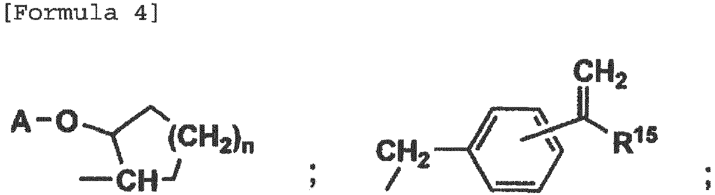

-CR¹⁵R' 15-C (=CH₂) -R' '¹⁵ ; -CR¹³R'¹³- (CH₂)ₘ-CO-X-A; -CR¹³R'¹³- (CH₂)ₘ-CO-O-CR¹⁵R'¹⁵-C(=CH₂)-R"¹⁵, or -CO-O-CR¹⁵R'¹⁵-C(=CH₂)-R"¹⁵, where A represents -CO-CR¹⁶=CH-R¹⁷.

R² moieties each independently represent a C6-C18 alkyl group, a C2-C6 alkenyl group, a phenyl group, a C7-C11 phenylalkyl group, COOR⁴, CN, -NH-CO-R⁵, a halogen atom, a trifluoromethyl group or -O-R³.

R³ has the same meaning as defined for R¹; R⁴ represents a C1-C18 alkyl group, a C3-C18 alkenyl group, a phenyl group, a C7-C11 phenylalkyl group, a C5-C12 cycloalkyl group, or R⁴ represents a C3-C50 alkyl group that can be interrupted by one or more -O-, -NH-, -NR⁷- or -S- moieties and optionally substituted with OH, a phenoxy group or a C7-C18 alkylphenoxy group; R⁵ represents H, a C1-C18 alkyl group, a C2-C18 alkenyl group, a C5-C12 cycloalkyl group, a phenyl group, a C7-C11 phenylalkyl group, a C6-C15 bicycloalkyl group, a C6-C15 bicycloalkenyl group or a C6-C15 tricycloalkyl group; R⁶ represents H, a C1-C18 alkyl group, a C3-C18 alkenyl group, a phenyl group, a C7-C11 phenylalkyl group or a C5-C12 cycloalkyl group; R⁷ and R⁸ each independently represent a C1-C12 alkyl group, a C3-C12 alkoxyalkyl group, a C4-C16 dialkylaminoalkyl group, or a C5-C12 cycloalkyl group, or R⁷ and R⁸ are linked together to form a C3-C9 alkylene group, a C3-C9 oxaalkylene group or a C3-C9 azaalkylene group; R⁹ represents a C1-C18 alkyl group, a C2-C18 alkenyl group, a phenyl group, a C5-C12 cycloalkyl group, a C7-C11 phenylalkyl group, a C6-C15 bicycloalkyl group, a C6-C15 bicycloalkylalkyl group, a C6-C15 bicycloalkenyl group or a C6-C15 tricycloalkyl group; R¹⁰ represents a C1-C12 alkyl group, a phenyl group, a naphthyl group or a C7-C14 alkylphenyl group; R¹¹ moieties each independently represent H, a C1-C18 alkyl group, a C3-C6 alkenyl group, a phenyl group, a C7-C11 phenylalkyl group, a halogen atom or a C1-C18 alkoxy group; R¹² represents a C1-C18 alkyl group, a C3-C18 alkenyl group, a phenyl group, a phenyl group substituted one to three times with C1-C8 alkyl, C1-C8 alkoxy, C3-C8 alkenoxy, halogen atom or trifluoromethyl group, or represents a C7-C11 phenylalkyl group, a C5-C12 cycloalkyl group, a C6-C15 tricycloalkyl group, a C6-C15 bicycloalkyl group, a C6-C15 bicycloalkylalkyl group, a C6-C15 bicycloalkenylalkyl group or -CO-R⁵, or R¹² represents a C3-C50 alkyl group that can be interrupted by one or more -O-, -NH-, -NR⁷- or -S- moieties and optionally substituted with OH, a phenoxy group or a C7-C18 alkylphenoxy group; R¹³ and R'¹³ each independently represent H, a C1-C18 alkyl group or a phenyl group; R¹⁴ represents a C1-C18 alkyl group, a C3-C12 alkoxyalkyl group, a phenyl group or a phenyl-C1-C4 alkyl group; R¹⁵, R'¹⁵, and R"¹⁵ each independently represent H or CH₃ ; R¹⁶ represents H, -CH₂-COO-R⁴, a C1-C4 alkyl group or CN; R¹⁷ represents H, -COOR⁴, a C1-C17 alkyl group or a phenyl group; X represents -NH-, -NR⁷-, -O-, -NH-(CH₂)ₚ-NH- or -O-(CH₂)_{q}-NH-; index m represents number of 0 to 19; n represents number of 1 to 8; p represents number of 0 to 4 ; and q represents number of 2 to 4 ; provided that at least one of R¹, R², and R¹¹ in general formula (I-A) contains 2 or more carbon atoms.

### <Low-Molecular-Weight Benzophenone-based UV Absorber>

Benzophenone-based ultraviolet ray can be represented by general formula (II) below.

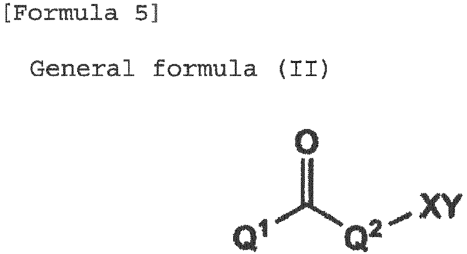

In the formula, Q¹ and Q² each independently represent an aromatic ring. X represents a substituent, and Y represents an oxygen atom, a sulfur atom, or a nitrogen atom. XY may be a hydrogen atom.

Examples of benzophenone-based UV absorbers include 2,4-dihydroxybenzophenone, 2-hydroxy-4-methoxybenzophenone, 2-hydroxy-4-n-octoxybenzophenone, 2-hydroxy-4-dodecyloxybenzophenone, 2-hydroxy-4-octadecyloxybenzophenone, 2,2'-dihydroxy-4-methoxybenzophenone, 2,2'-dihydroxy-4,4'-dimethoxybenzophenone, and 2,2',4,4'-tetrahydroxybenzophenone.

### <Low-Molecular-Weight Benzotriazole-based UV Absorber>

Benzotriazole-based ultraviolet ray can be represented by general formula (III) below.

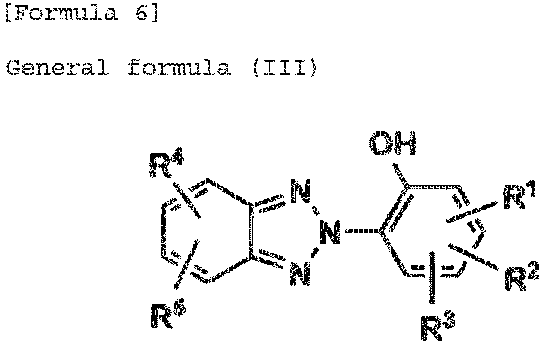

In the formula, R¹, R², R³, R⁴, and R⁵ each independently represent a monovalent organic group and at least one of R¹, R², and R³ represents an unsubstituted straight or branched chain alkyl group with a total carbon number of 10 to 20.

Example of benzotriazole-based ultraviolet absorbers include 2-(2'-hydroxy-5-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriaz ole, 2-(2'-hydroxy-3'-(3",4",5", 6"-tetrahydrophthalimidomethyl)-5'-methylphenyl)benzotriaz ole, 2,2-methylenebis(4-(1,1,3,3-tetramethylbutyl)-6-(2H-benzotr iazole-2-yl)phenol, 2-(2'-hydroxy-3'-tert-butyl-5'-methylphenyl)-5-chlorobenzot riazole, 2-(2'-hydroxy-3',5'-di-tert-butylphenyl)-5-chlorobenzotriaz ole, (2-(2'-hydroxy-3',5'-di-tert-amylphenyl)-5-chlorobenzotriaz ole, 2-(2'-hydroxy-3',5'-di-tert-butylphenyl)-5-chlorobenzotriaz ole, and (2-(2'-hydroxy-3',5'-di-tert-amylphenyl)-5-chlorobenzotriaz le.

### <High-Molecular-Type UV Absorber>

As used herein, the term "high-molecular-type UV absorber" is intended to include a compound having a weight average molecular weight of 500 or more. The weight average molecular weight can be measured using a gel permeation chromatography (GPC) system.

The high-molecular-type UV absorber for use in the invention is preferably a compound represented by general formula (3) below, in particular, more preferably a high-molecular-weight benzotriazole-based UV absorber having a benzotriazole group.

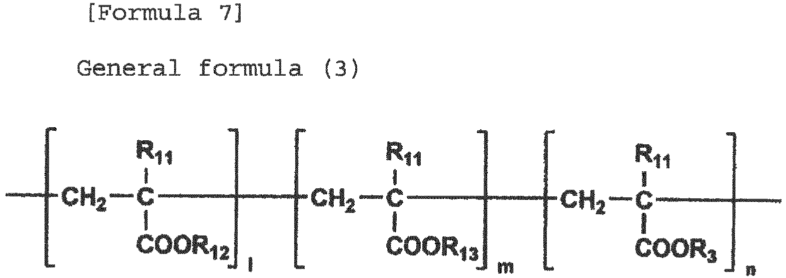

In the formula, R₁₁ represents a hydrogen atom or a methyl group, R₁₂ and R₁₃ each represent a hydrogen atom, an alkyl group or an aryl group and R₃ represents a benzophenone group or a benzotriazole group. The letters 1, m and n each represent an integer of 1 or more.

For example, the alkyl group represented by each of R₁₂ and R₁₃ are linear, branched or cyclic alkyl group such as methyl, ethyl, propyl, isopropyl, butyl, isobutyl, sec-butyl, tert-butyl, pentyl, 1-methylbutyl, 2-methylbutyl, 3-methylbutyl, 1-ethylpropyl, 1,1-dimethylpropyl, 1,2-dimethylpropyl, 2,2-dimethylpropyl, hexyl, 1-methylpentyl, 2-methylpentyl, 3-methylpentyl, 4-methylpentyl, 1,1-dimethylbutyl, 2,2-dimethylbutyl, 3,3-dimethylbutyl, 1,2-dimethylbutyl, 1,3-dimethylbutyl, 2,3-dimethylbutyl, 1-ethylbutyl, 2-ethylbutyl, heptyl, octyl, nonyl, decyl, cyclopropyl, cyclobutyl, cyclopentyl, cyclohexyl, cycloheptyl, cyclooctyl, cyclononyl or cyclodecyl.

For example, the aryl group represented by each of R₁ and R₂ is phenyl, tolyl, xylyl, ethylphenyl, benzyl or phenethyl.

Other high-molecular-type UV absorbers include the compounds described in JP 2004-42614 A. Specific examples include
[2-hydroxy-4-(methacryloyloxyethoxy)benzophenone]-methyl methacrylate copolymer,
[2-hydroxy-4-(methacryloyloxymethoxy)benzophenone]-methyl methacrylate copolymer,
[2-hydroxy-4-(methacryloyloxyoctoxy)benzophenone]-methyl methacrylate copolymer,
[2-hydroxy-4-methacryloyloxydodecyloxy)benzophenone]-methyl methacrylate copolymer,
[2-hydroxy-4-(methacryloyloxybenziloxy)benzophenone]-methyl methacrylate
copolymer,[2,2'-dihydroxy-4-(methacryloyloxyethoxy)benzophe none]-methyl methacrylate copolymer,
[2,2'-dihydroxy-4-(methacryloyloxymethoxy)benzophenone]-met hyl methacrylate copolymer,
[2,2'-dihydroxy-4-(methacryloyloxyoctoxy)benzophenone]-meth yl methacrylate copolymer,
[2,2'-dihydroxy-4-(methacryloyloxybenziloxy)benzophenone]-m ethyl methacrylate copolymer,
[2,2-dihydroxy-4-methacryloyloxydodecyloxy)benzophenone]-me thyl methacrylate copolymer,
[2,2',4-trihydroxy-4'-(methacryloyloxyethoxy)benzophenone]-methyl methacrylate
copolymer,[2,2',4-trihydroxy-4'-(methacryloyloxymethoxy)ben zophenone]-methyl methacrylate copolymer,
[2,2',4-trihydroxy-4'-(methacryloyloxyoctoxy)benzophenone]-methyl methacrylate copolymer,
[2,2',4-trihydroxy-4'-methacryloyloxydodecyloxy)benzophenon e]-methyl methacrylate copolymer,
[2,2',4-trihydroxy-4'-(methacryloyloxybenziloxy)benzophenon e]-methyl methacrylate copolymer,
[4-hydroxy-4'-(methacryloyloxyethoxy)benzophenone]-methyl methacrylate copolymer,
[4-hydroxy-4'-(methacryloyloxymethoxy)benzophenone]-methyl methacrylate copolymer,
[4-hydroxy-4'-(methacryloyloxyoctoxy)benzophenone]-methyl methacrylate copolymer,
[4-hydroxy-4'-methacryloyloxydodecyloxy)benzophenone]-methy l methacrylate copolymer,
[4-hydroxy-4'-(methacryloyloxybenziloxy)benzophenone]-methy l methacrylate copolymer,
[2-hydroxy-4'-methyl-4-(methacryloyloxyethoxy)benzophenone] -methyl methacrylate copolymer,
[2-hydroxy-4'-methyl-4-(methacryloyloxymethoxy)benzophenone ]-methyl methacrylate
[2-hydroxy-4'-methyl-4-(methacryloyloxyoctoxy)benzophenone] -methyl methacrylate
[2-hydroxy-4'-methyl-4-methacryloyloxydodecyloxy)benzopheno ne]-methyl methacrylate
[2-hydroxy-4'-methyl-4-(methacryloyloxybenziloxy)benzopheno ne]-methyl methacrylate
[2-(2'-hydroxy-4'-methacryloyloxyethoxy)benzotriazole]-meth yl methacrylate and
[2-(2'-hydroxy-4'-methacryloyloxyethoxy)-5-chlorobenzotriaz ole]-methyl methacrylate copolymer. Other
high-molecular-type UV absorbers with a molecular weight of 500 or more, such as
2,2'-methylenebis[6-(2H-benzotriazole-2-yl)-4-(1,1,3,3-tetr amethylbutyl)phenol], are also preferred.

### <Antioxidant>

An antioxidant is preferably used in the hard coat layer. The use of an antioxidant can improve weather resistance. It is effective to use an antioxidant in the outermost surface layer.

The antioxidant usable in the invention can be selected from the antioxidant group consisting of a hindered phenol-based compound, a hindered amine-based compound and a phosphorus compound.

Examples of the hindered phenol-based compound include n-octadecyl 3-(3,5-di-tert-butyl-4-hydroxyphenyl-propionate, n-octadecyl 3-(3,5-di-tert-butyl-4-hydroxyphenyl)-acetate, n-octadecyl 3,5-di-t-butyl-4-hydroxybenzoate, n-hexyl 3,5-di-t-butyl-4-hydroxyphenylbenzoate, n-dodecyl 3,5-di-tert-butyl-4-hydroxyphenylbenzoate, neo-dodecyl 3-(3,5-di-t-butyl-4-hydroxyphenyl)propionate, dodecyl β-(3,5-di-t-butyl-4-hydroxyphenyl)propionate, ethyl α-(4-hydroxy-3,5-di-t-butylphenyl)isobutyrate, octadecyl α-(4-hydroxy-3,5-di-t-butylphenyl)isobutyrate, octadecyl α-(4-hydroxy-3,5-di-t-butyl-4-hydroxyphenyl)propionate, 2-(n-octylthio)ethyl 3,5-di-tert-butyl-4-hydroxybenzoate, 2-(n-octylthio)ethyl 3,5-di-t-butyl-4-hydroxy-phenylacetate, 2-(n-octadecylthio)ethyl 3,5-di-t-butyl-4-hydroxyphenylacetate, 2-(n-octadecylthio)ethyl 3,5-di-t-butyl-4-hydroxy-benzoate, 2-(2-hydroxyethylthio)ethyl 3,5-di-t-butyl-4-hydroxybenzoate, diethylglycol bis-(3,5-di-t-butyl-4-hydroxy-phenyl) propionate, 2-(n-octadecylthio)ethyl 3-(3,5-di-t-butyl-4-hydroxyphenyl) propionate, stearamido N,N-bis-[ethylene 3-(3,5-di-t-butyl-4-hydroxyphenyl)propionate], n-butylimino N,N-bis-[ethylene 3-(3,5-di-t-butyl-4-hydroxyphenyl)propionate], 2-(2-stearoyloxyethylthio)ethyl 3,5-di-t-butyl-4-hydroxybenzoate, 2-(2-stearoyloxyethylthio)ethyl 7-(3-methyl-5-t-butyl-4-hydroxyphenyl)heptanoate, 1,2-propyleneglycol bis-[3-(3,5-di-t-butyl-4-hydroxyphenyl)propionate], ethyleneglycol bis-[3-(3,5-di-t-butyl-4-hydroxyphenyl) propionate], neopentylglycol bis-[3-(3,5-di-t-butyl-4-hydroxyphenyl) propionate], ethyleneglycol bis-(3,5-di-t-butyl-4-hydroxyphenylacetate), glycerin-1-n-octadecanoate-2,3-bis-(3,5-di-t-butyl-4-hydrox yphenylacetate), pentaerythritol tetrakis-[3-(3',5'-di-t-butyl-4'-hydroxyphenyl)propionate], 3,9-bis-{2-[3-(3-t-butyl-4-hydroxy-5-methylphenyl)propionyl oxy]-1,1-dimethylethyl}-2,4,8,10-tetraoxaspiro[5.5]undecane, 1,1,1-trimethylolethane-tris-[3-(3,5-di-t-butyl-4-hydroxyph enyl)propionate], sorbitol hexa-[3-(3,5-di-t-butyl-4-hydroxyphenyl) propionate], 2-hydroxyethyl 7-(3-methyl-5-t-butyl-4-hydroxyphenyl) propionate, 2-stearoyloxyethyl 7-(3-methyl-5-t-butyl-4-hydroxyphenyl) heptanoate, 1,6-n-hexanediol-bis[(3',5'-di-t-butyl-4-hydroxyphenyl)prop ionate], and pentaerythritol tetrakis(3,5-di-t-butyl-4-hydroxyhydrocinnamate). For example, the above types of phenol compounds are commercially available under the trade names "IRGANOX 1076" and "IRGANOX 1010" from Ciba Japan K.K.

Examples of the hindered amine-based compound include bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(N-octoxy-2,2,6,6-tetramethyl-4-piperidyl)sebacate, bis(N-benzyloxy-2,2,6,6-tetramethyl-4-piperidyl)sebacate, bis(N-cyclohexyloxy-2,2,6,6-tetramethyl-4-piperidyl)sebacat e, bis(1,2,2,6,6-pentamethyl-4-piperidyl) 2-(3,5-di-t-butyl-4-hydroxybenzyl)-2-butylmalonate, bis(1-acryloyl-2,2,6,6-tetramethyl-4-piperidyl) 2,2-bis(3,5-di-t-butyl-4-hydroxybenzyl)-2-butylmalonate, bis(1,2,2,6,6-pentamethyl-4-piperidyl)decanedioate, 2,2,6,6-tetramethyl-4-piperidyl methacrylate, 4-[3-(3,5-di-t-butyl-4-hydroxyphenyl)propionyloxy]-1-[(2-(3 -(3,5-di-t-butyl-4-hydroxyphenyl)propionyloxy)ethyl]-2,2,6, 6-tetramethylpiperidine, 2-methyl-2-(2,2,6,6-tetramethyl-4-piperidyl)amino-N-(2,2,6, 6-tetramethyl-4-piperidyl)propionamide, tetrakis(2,2,6,6-tetramethyl-4-piperidyl) 1,2,3,4-butanetetracarboxylate, and tetrakis(1,2,2,6,6-pentamethyl-4-piperidyl) 1,2,3,4-butanetetracarboxylate.

The hindered amine-based compound may also be of a high-molecular type, examples of which include, but are not limited to, N,N',N'',N'''-tetrakis-[4,6-bis-[butyl-(N-methyl-2,2,6,6-te tramethylpiperidine-4-yl)amino]-triazine-2-yl]-4,7-diazadec ane-1,10-diamine; a polycondensate of dibutylamine, 1,3,5-triazine-N,N'-bis(2,2,6,6-tetramethyl-4-piperidyl)-1, 6-hexamethylenediamine, and N-(2,2,6,6-tetramethyl-4-piperidyl)butylamine; a polycondensate of dibutylamine, 1,3,5-triazine, and N,N'-bis(2,2,6,6-tetramethyl-4-piperidyl)butylamine; poly[{(1,1,3,3-tetramethylbutyl)amino-1,3,5-triazine-2,4-di yl}{(2,2,6,6-tetramethyl-4-piperidyl)imino}hexamethylene{(2 ,2,6,6-tetramethyl-4-piperidyl)imino}]; a polycondensate of 1,6-hexanediamine-N,N'-bis(2,2,6,6-tetramethyl-4-piperidyl) and morpholine-2,4,6-trichloro-1,3,5-triazine; a high-molecular-weight HALS in which a plurality of piperidine rings are linked through a triazine skeleton, such as poly[(6-morpholino-s-triazine-2,4-diyl)[(2,2,6,6-tetramethy 1-4-piperidyl)imino]-hexamethylene[(2,2,6,6-tetramethyl-4-p iperidyl)imino]]; a polymer of dimethyl succinate and 4-hydroxy-2,2,6,6-tetramethyl-l-piperidineethanol; and a compound having a piperidine ring linked through an ester bond, such as a product of esterification of a mixture of 1,2,3,4-butanetetracarboxylic acid, 1,2,2,6,6-pentamethyl-4-piperidinol, and 3,9-bis(2-hydroxy-1,1-dimethylethyl)-2,4,8,10-tetraoxaspiro [5,5]undecane.

Particularly preferred are a polycondensate of dibutylamine, 1,3,5-triazine, and N,N'-bis(2,2,6,6-tetramethyl-4-piperidyl)butylamine; poly[{(1,1,3,3-tetramethylbutyl)amino-1,3,5-triazine-2,4-di yl}{(2,2,6,6-tetramethyl-4-piperidyl)imino)hexamethylene{(2 ,2,6,6-tetramethyl-4-piperidyl)imino)]; and a polymer of dimethyl succinate and 4-hydroxy-2,2,6,6-tetramethyl-1-piperidineethanol, each of which preferably has a number average molecular weight (Mn) of 2,000 to 5,000.

For example, the above types of hindered amine compounds are commercially available under the trade names "TUNUVIN 144" and "TUNUVIN 770" from Ciba Japan K.K and the trade name "ADK STAB LA-52" from ADEKA CORPORATION.

Examples of the phosphorus compound include monophosphite compounds such as triphenyl phosphite, diphenylisodecyl phosphite, phenyldiisodecyl phosphite, tris(nonylphenyl) phosphite, tris(dinonylphenyl) phosphite, tris(2,4-di-t-butylphenyl) phosphite, 10-(3,5-di-t-butyl-4-hydroxybenzyl)-9,10-dihydro-9-oxa-10-p hosphaphenanthrene-10-oxide, 6-[3-(3-t-butyl-4-hydroxy-5-methylphenyl)propoxy]-2,4,8,10-tetra-t-butyldibenz[d,f][1.3.2]dioxaphosphepin, and tridecyl phosphite; diphosphite compounds such as 4,4'-butylidene-bis(3-methyl-6-t-butylphenyl-di-tridecyl phosphite) and 4,4'-isopropylidene-bis(phenyl-di-alkyl(C12-C15) phosphite); phosphonite compounds such as triphenyl phosphonite, tetrakis(2,4-di-t-butylphenyl)[1,1-biphenyl]-4,4'-diylbisph osphonite, and tetrakis(2,4-di-t-butyl-5-methylphenyl)[1,1-biphenyl]-4,4'-diylbisphosphonite; phosphinite compounds such as triphenyl phosphinite and 2,6-dimethylphenyldiphenyl phosphinite; and phosphine compounds such as triphenylphosphine and tris(2,6-dimethoxyphenyl)phosphine.

The above types of phosphorus compounds are commercially available under the trade name "Sumilizer GP" from Sumitomo Chemical Co., Ltd., under the trade names "ADK STAB PEP-24G", "ADK STAB PEP-36", and "ADK STAB 3010" from ADEKA CORPORATION, under the trade name "IRGAFOS P-EPQ" from Ciba Japan K.K., and under the trade name "GSY-P101" from Sakai Chemical Industry Co., Ltd.

### [Anchor Layer]

An anchor layer may be formed in the reflective film of the invention. The anchor layer is made of resin to bond a plastic film to the reflective layer described below. Thus, the anchor layer should have adhesive properties for bonding a plastic film to the reflective layer, heat resistance for withstanding heat even during the formation of the reflective layer by vacuum deposition or the like, and smoothness for unleashing the original highly-reflective performance of the reflective layer.

The resin used in the anchor layer may be of any type satisfying the requirements for adhesion, heat resistance, and smoothness. The resin used in the anchor layer may be a simple resin such as polyester resin, acrylic resin, melamine resin, epoxy resin, polyamide resin, vinyl chloride resin, or vinyl chloride-vinyl acetate copolymer resin, or a blend of any of these resins. A blend of polyester resin and melamine resin is preferred in view of weather resistance, and more preferably, such a blend is mixed with a curing agent such as an isocyanate to form a thermosetting resin.

The anchor layer is preferably has a thickness of 0.01 to 3 µm and more preferably 0.1 to 1 µm.

When the thickness is in the above range, the anchor layer formed has good adhesive properties, is significantly effective, and can cover the irregularities of the surface of a plastic film to provide good smoothness, which accordingly increases the reflectance of the reflective film. Increasing the thickness above 3 µm would not improve the adhesive properties and may cause uneven coating to reduce smoothness.

The anchor layer may be formed using a conventionally known coating method such as gravure coating, reverse coating, or die coating.

### [Optically-Transparent Resin Layer]

The transparent resin layer is made of a resin material having optical transparency. The resin layer preferably contains an ultraviolet absorber.
The resin material for use in the transparent resin layer is not restricted, and various conventionally known synthetic resins that can maintain transparency when formed into a thin film may be used. Examples of such resins include polyesters such as polyethylene terephthalate (PET) and polyethylene naphthalate (PEN), polyethylene, polypropylene, cellophane, cellulose esters or derivatives thereof, such as cellulose diacetate, cellulose triacetate (TAC), cellulose acetate butyrate, cellulose acetate propionate (CAP), cellulose acetate phthalate, and cellulose nitrate, polyvinylidene chloride, polyvinyl alcohol, polyethylene vinyl alcohol, syndiotactic polystyrene, polycarbonate, norbornene resin, polymethylpentene, polyether ketone, polyimide, polyethersulfone (PES), polysulfones, polyether ketone imide, polyamide, fluororesin, nylon, poly(methyl methacrylate), acrylic resin or polyarylates, and cycloolefin resins such as ARTON (trade name, manufactured by JSR Corporation) and APEL (trade name, manufactured by Mitsui Chemicals, Inc.).

For example, the method of forming the transparent resin layer may be a melt casting method, a film forming method by extrusion molding, or a coating method.
A conventionally known resin film formed by such a method as melt casting or extrusion molding, which is commercially available, can be used as the transparent resin layer.
The transparent resin layer may be formed as a coating by various conventional coating methods such as spray coating, spin coating, and bar coating. When the transparent layer is formed, the material for forming the transparent resin layer may be applied directly to a light-incidence-side surface of a reflective silver layer or applied to a surface of a component layer (e.g., an anti-corrosion layer) provided on the light-incidence side of a reflective silver layer.
Such a coating method can form a transparent resin layer with higher smoothness. Specifically, such a coating method can form a transparent resin layer with a center line average roughness (Ra) of 3 nm or more and 20 nm or less. In other words, the transparent resin layer with a center line average roughness falling within the value range may be deemed to be provided not by bonding a transparent resin film, which is provided by melt film forming, with an adhesive layer but by coating.
The transparent resin layer preferably has a thickness of 10 to 150 µm. The thickness of the transparent resin layer is more preferably from 20 to 100 µm, and even more preferably from 40 to 100 µm.
The center line average roughness (Ra) as a measure of the smoothness of the transparent resin layer can be determined by the method according to JIS B 0601-1982.

Among the resin materials listed above, acrylic resin is advantageously used as a material for forming the transparent resin layer.
When acrylic resin is used to form the transparent resin layer, fine particles of a plasticizer may be added to the acrylic resin so that a soft and less breakable, transparent, acrylic resin layer can be obtained, because the acrylic resin is hard. A preferred example of the plasticizer is butyl rubber or butyl acrylate.

The transparent acrylic resin layer is preferably composed mainly of methacrylic resin. The methacrylic resin is a methacrylate-based polymer, which may be a homopolymer of a methacrylate or a copolymer of 50% by weight or more of a methacrylate and 50% by weight or less of any other monomer. Usually, an alkyl methacrylate is used as the methacrylate. In particular, poly(methyl methacrylate) resin (PMMA) is preferably used as the methacrylic resin.

The monomer composition of the methacrylic resin is preferably 50 to 100% by weight of a methacrylate, 0 to 50% by weight of an acrylate, and 0 to 49% by weight of any other monomer, and more preferably 50 to 99.9% by weight of a methacrylate, 0.1 to 50% by weight of an acrylate, and 0 to 49% by weight of any other monomer, with respect to the weight of all monomers.

Examples of the alkyl methacrylate include methyl methacrylate, ethyl methacrylate, butyl methacrylate, and 2-ethylhexyl methacrylate, and the alkyl group generally has 1 to 8 carbon atoms, preferably 1 to 4 carbon atoms. In particular, methyl methacrylate is preferably used.

Examples of the alky acrylate include methyl acrylate, ethyl acrylate, butyl acrylate, and 2-ethylhexyl acrylate, and the alkyl group generally has 1 to 8 carbon atoms, preferably 1 to 4 carbon atoms.

The monomer other than the alkyl methacrylate and the alkyl acrylate may be a monofunctional monomer, specifically, a compound having one polymerizable carbon-carbon double bond in its molecule, or may be a polyfunctional monomer, specifically, a compound having at least two polymerizable carbon-carbon double bonds in its molecule. A monofunctional monomer is preferably used. Examples of such a monofunctional monomer include aromatic alkenyl compounds such as styrene, α-methylstyrene, and vinyltoluene; and alkenyl cyanides such as acrylonitrile and methacrylonitrile. Example of the polyfunctional monomer include polyhydric alcohol esters of unsaturated polycarboxylic acids such as ethylene glycol dimethacrylate, butanediol dimethacrylate and trimethylolpropane triacrylate; alkenyl esters of unsaturated carboxylic acids such as allyl acrylate, allyl methacrylate and allyl cinnamate; polyalkenyl esters of polybasic acids such as diallyl phthalate, diallyl maleate, triallyl cyanurate and triallyl isocyanurate; and aromatic polyalkenyl compounds such as divinylbenzene.

If necessary, two or more of the alkyl methacrylates, two or more of the alkyl acrylates, and two or more other monomers may be used.

In view of the heat resistance of the film, the methacrylic resin preferably has a glass transition temperature of 40°C or higher and more preferably 60°C or higher. The glass transition temperature can be appropriately set by controlling the type or content of the monomers.

The methacrylic resin can be prepared by suspension polymerization, emulsion polymerization, bulk polymerization, or other types of polymerization of the constituent monomers. In this process, a chain transfer agent is preferably used during the polymerization so that an appropriate glass transition temperature can be obtained and so that an appropriate level of viscosity for appropriate film formability can be obtained. The amount of the chain transfer agent may be determined as appropriate depending on the type or content of the monomers.
Examples of the ultraviolet absorber may include those generally listed above for the hard coat layer.

Besides the above, a compound having the function of converting the energy of ultraviolet light to intramolecular vibrational energy and emitting the vibrational energy as thermal energy may also be used as an ultraviolet absorber. The ultraviolet absorber may also be used in combination with a compound that produces an effect when used in combination with an antioxidant or a colorant or the like or may also be used in combination with a light stabilizer, called a quencher, capable of acting as a light energy-converting agent. When any of the above ultraviolet absorbers is used, the light absorption wavelength of the ultraviolet absorber should be selected not to overlap the effective wavelength of the photopolymerization initiator. When a common ultraviolet absorber is used, a photopolymerization initiator that produces radicals when exposed to visible light can be effectively used.

If necessary, two or more of the above ultraviolet absorbers may be used. If necessary, any other ultraviolet absorber than the above ultraviolet absorbers, such as a salicylic acid derivative, substituted acrylonitrile, or a nickel complex may also be added.

The content of the ultraviolet absorber in the transparent resin layer is preferably from 0.1 to 20% by weight, more preferably from 1 to 15% by weight and even more preferably from 3 to 10% by weight. The ultraviolet absorber content of the transparent resin layer per unit film area is preferably from 0.17 to 2.28 g/m² and more preferably from 0.4 to 2.28 g/m² or more. When the content is in the above range, sufficient weather resistance can be provided while pollution of the roll or the film can be prevented, which would otherwise be caused by bleed-out of the ultraviolet absorber.
The ultraviolet absorber-containing transparent resin layer may also contain an antioxidant for preventing its degradation. Examples of such an antioxidant may include those generally listed above for the hard coat layer.

An antistatic agent may also be added to the transparent resin layer to impart antistatic properties thereto.
A phosphorus-based flame retardant may also be added to the transparent resin layer. The phosphorus-based flame retardant for use in this layer may be one selected from red phosphorus, triaryl phosphate, diaryl phosphate, monoaryl phosphate, an arylphosphonic acid compound, an arylphosphine oxide compound, condensed aryl phosphate, halogenated alkyl phosphate, halogen-containing condensed phosphate, halogen-containing condensed phosphonate, and halogen-containing phosphite, or a mixture of two or more of the above.
Specific examples of the flame retardant include triphenyl phosphate, 9,10-dihydro-9-oxa-10-phosphaphenanthrene-10-oxide, phenyl phosphonate, tris(β-chloroethyl)phosphate, tris(dichloropropyl)phosphate, and tris(tribromoneopentyl)phosphate.

### [Adhesive Layer]

The adhesive layer may be of any type provided that it has the function of increasing the adhesion between the reflective layer and the resin substrate. Thus, the adhesive layer should have adhesive properties for bonding the reflective layer to the resin substrate, heat resistance for withstanding heat during the formation of the reflective layer by vacuum deposition or the like, and smoothness for unleashing the original highly-reflective performance of the reflective layer.

In view of adhesion, smoothness, the reflectance of the reflective material, or other properties, the adhesive layer preferably has a thickness of 0.01 to 3 µm and more preferably 0.1 to 1 µm.

The adhesive layer may be made of resin. In this case, the resin may be of any type capable of satisfying the above requirements for adhesion, heat resistance, and smoothness. Polyester resin, acrylic resin, melamine resin, epoxy resin, polyamide resin, vinyl chloride resin, vinyl chloride-vinyl acetate copolymer resin, or the like may be used alone, or a blend of any of these resins may be used. In view of weather resistance, a blend of polyester resin and melamine resin is preferred and more preferably, the blend is further mixed with a curing agent such as an isocyanate to form a thermosetting resin composition. The adhesive layer can be formed using a conventionally known coating method such as gravure coating, reverse coating, or die coating.

The adhesive layer may be made of metal oxide. In this case, the adhesive layer such as silicon oxide, aluminum oxide, silicon nitride, aluminum nitride, lanthanum oxide, lanthanum nitride or the like can be formed by any of various vacuum film forming methods. Examples of vacuum film forming methods include resistance heating vacuum deposition, electron beam heating vacuum deposition, ion plating, ion beam-assisted vacuum deposition and sputtering.

### [Reflective Layer]

The reflective layer according to the invention is a layer including a metal or the like having the function of reflecting sunlight. The reflective layer preferably has a surface reflectance of 80% or more, and more preferably 90% or more. The reflective layer is preferably made of a material including at least one selected from the element group consisting of Al, Ag, Cr, Cu, Ni, Ti, Mg, Rh, Pt, and Au. In particular, the reflective layer is preferably composed mainly of Al or Ag in view of reflectance or corrosion resistance, and two or more thin films of such a metal may be layered to form the reflective layer. In the invention, a silver reflective layer composed mainly of silver is particularly preferred.

Metal oxide layers such as SiO₂ and TiO₂ layers may also be provided in this order on the reflective layer to further improve the reflectance.

For example, the reflective layer according to the invention (e.g., the silver reflective layer) can be formed using any one of a wet method and a dry method.

The term "wet method" is a generic name for plating, which is a method of forming a film by deposition of a metal from a solution. For example, such a method may be a silver mirror reaction or the like.

The term "dry method" is a generic name for vacuum film forming methods, examples of which include resistance heating vacuum deposition, electron beam heating vacuum deposition, ion plating, ion beam-assisted vacuum deposition, and sputtering. In particular, a vapor deposition method capable of performing a roll-to-roll process for continuous film production is preferably used in the invention. That is, a method for producing the film mirror of the invention preferably includes forming the reflective layer by vapor deposition of silver.

In view of reflectance and other properties, the reflective layer preferably has a thickness of 10 to 200 nm, and more preferably 30 to 150 nm.

### [Anti-Corrosion Layer]

The anti-corrosion layer is preferably provided adjacent to the reflective layer and may contain a corrosion inhibitor for silver. The corrosion inhibitor, which is preferably used, is broadly classified into the following types: a corrosion inhibitor having an adsorbing group for silver; and a corrosion inhibitor (also referred to as "antioxidant") having antioxidant capacity.

As used herein, the term "corrosion" refers to a phenomenon in which metal (silver) is chemically or electrochemically eroded or degraded as material by environmental materials surrounding the metal (see JIS Z 0103-2004).

In a preferred mode, the anti-corrosion layer of the film mirror for solar thermal power generation preferably contains a corrosion inhibitor having an adsorbing group for silver or preferably contains an antioxidant.

In general, the content of the corrosion inhibitor is preferably in the range of 0.1 to 1.0 /m², while its optimal content depends on the compound used.

### <Corrosion Inhibitor Having Adsorbing Group for Silver>

The corrosion inhibitor having an adsorbing group for silver is preferably selected from at least one or any mixture of amines and derivatives thereof, pyrrole ring-containing compounds, triazole ring-containing compounds, pyrazole ring-containing compounds, thiazole ring-containing compounds, imidazole ring-containing compounds, indazole ring-containing compounds, copper chelate compounds, thioureas, mercapto group-containing compounds, and naphthalene compounds.

### <Antioxidant>

An antioxidant may also be used as the corrosion inhibitor to be added to the anti-corrosion layer.

A phenol-based antioxidant, a thiol-based antioxidant, and a phosphate-based antioxidant are preferably used.

In the invention, the antioxidant may also be used in combination with a light stabilizer.

### [Substrate]

A resin film or a glass film may be used as the substrate according to the invention.

### <Resin Film>

A variety of conventionally known resin films may be used. Examples include cellulose ester films, polyester films, polycarbonate films, polyarylate films, polysulfone (including polyethersulfone) films, polyester films such as polyethylene terephthalate or polyethylene naphthalate films, polyethylene films, polypropylene films, cellophane films, cellulose diacetate films, cellulose triacetate films, cellulose acetate propionate films, cellulose acetate butyrate films, polyvinylidene chloride films, polyvinyl alcohol films, ethylene vinyl alcohol films, syndiotactic polystyrene films, polycarbonate films, norbornene resin films, polymethylpentene films, polyether ketone films, polyether ketone imide films, polyamide films, fluororesin films, nylon films, poly(methyl methacrylate) films, and acrylic films.

In particular, polycarbonate films, polyester films, norbornene resin films, and cellulose ester films are preferred. Particularly, polyester films or cellulose ester films are preferably used, which may be films produced by melt casting or solution casting.

The resin film preferably has an appropriate thickness depending on the type of the resin, the intended purpose, or the like. For example, the thickness of the resin film is usually in the range of 10 to 300 µm. It is preferably from 20 to 200 µm and more preferably from 30 to 100 µm.

### <Glass Film>

The film mirror of the invention may have a silver reflective layer on a support that is a glass film with a thickness in the range of 1.0 to 200 µm.

The glass film is preferably obtained from a glass roll formed by a down draw process. Specifically, the glass film is preferably obtained from a glass roll manufactured by a process as disclosed in JP 2010-132347 A which includes providing a glass film formed by a down draw process with its front and back surfaces being exposed, placing the glass film on a protective sheet, and winding them into a roll.

According to such a structure, the glass film formed by a down draw process with its front and back surfaces being exposed is remained as it is, and wound with the protective sheet into a roll to form a glass roll. Thus, this process does not need to perform the step of forming a protective film such as a polymer layer on any of the front and back surfaces of the glass film before the packing step. This process also avoids the need for performing a step of removing the protective film such as a polymer layer from the surface of the glass film after the unpacking step.

Thus, the number of steps before the packing step can be reduced because of no need for the step of forming a protective film. Thus, this process can reduce the risk of foreign material deposition on the front or back surface of the glass film as much as possible and can prevent protective film-derived foreign materials from remaining after the unpacking step. Accordingly, this process can successfully maintain the cleanliness of the front and back surfaces of the glass film obtained by the down draw process. This process is also advantageous in that the front and back surfaces formed by the down draw process can be kept clean in an unpolished state in contrast to the surface formed by a float process, which needs surface polishing after the process.

In addition, the exposed front and back surfaces of the glass film in the form of a glass roll are protected by the protective sheet. The front and back surfaces of the glass film are made of glass without any protective film such as any polymer layer formed thereon. Thus, the glass film and the protective sheet hardly adhere to each other when winded into a roll. This makes it possible to reliably reduce the risk of damage to the glass film in the form of a glass roll and to keep the glass film and the protective sheet well-separable from each other, so that the risk of damage to the glass film during the unpacking step can also be reduced as much as possible.

Even after holding in the form of a roll for a long period of time, the glass film can be easily fed to the next step without being warped. In addition, a long glass film can be used in the form of a roll, which can be cut into pieces of any desired length, so that substrates with a variety of sizes can be handled and waste of the glass film can be prevented.

In the invention, the glass film should have a thickness in the range of 1.0 to 200 µm. The thickness of the glass film is preferably 30 µm or more and 150 µm or less and more preferably from 50 µm to 120 µm. If the glass film has a thickness of less than 1 µm, it can fail to withstand the tension during the process of winding it into a roll, so that it can be broken. If the glass film has a thickness of more than 200 µm, it can be difficult to be winded into a roll.

The glass film with its thickness set as described above can have adequate flexibility. This can reduce undesired stress on the glass film being winded into a roll and can prevent the glass film from being broken.

The glass film having the features described above preferably has an arithmetic mean roughness Ra of 0.1 µm or less with respect to both transverse end faces. As used herein, the term "arithmetic mean roughness Ra" refers to the value determined according to JIS B 0601-2001.

The glass film with such a feature can have adequate smoothness on both transverse end faces. This makes fine scratches less likely to occur on both end faces in the process of winding the glass film into a roll, so that breaking from both end faces of the glass film can be prevented. Accordingly, glass powder (cullet) formed by fine scratch-induced chipping on the end face of the glass film can be reduced, which is also very advantageous in keeping the front and back surfaces of the glass film clean. In addition, the end face of the glass film is prevented from hooking on the protective sheet even when the end face comes into contact with the protective sheet, and the glass film and the protective sheet are well separable from each other.

The both transverse end faces of the glass film with the features described above are each preferably a surface formed by laser cutting. As used herein, the term "laser cutting" is intended to include not only laser fusion cutting but also laser cleaving.

### (Reflecting Device for Solar Thermal Power Generation)

The reflecting device for solar thermal power generation includes at least the film mirror for solar thermal power generation and a support. The reflecting device for solar thermal power generation preferably includes a sticky layer for bonding the film mirror and the support together.

### [Support]

A metallic sheet, a resin sheet, or a metal-resin composite sheet may be used as the support in the reflecting device for solar thermal power generation according to the invention. The metallic sheet may be a sheet made of a metallic material with high thermal conductivity, such as a steel sheet, a copper sheet, an aluminum sheet, an aluminum-plated steel sheet, an aluminum alloy-plated steel sheet, a copper-plated steel sheet, a tin-plated steel sheet, a chromium-plated steel sheet, or a stainless steel sheet. The resin sheet may be an acrylic resin sheet, a urethane resin sheet, a polystyrene resin sheet, a polyimide resin sheet, a phenolic resin sheet, a polycarbonate resin sheet, an alicyclic hydrocarbon resin sheet, a polypropylene resin sheet, a polyolefin resin sheet, a melamine resin sheet, or an ABS resin sheet. The metal-resin composite sheet may be a laminate of the metallic sheet and the resin sheet or a laminate of the metallic sheet and resin foam. As used herein, the term "resin foam" means porous resin, examples of which include polystyrene-based, polyolefin-based, polyurethane-based, melamine resin-based, and polyimide-based materials.

The thickness of any of these supports is preferably from about 0.05 mm to about 3 mm in view of handleability, thermal conductivity, heat capacity, and other properties.

### [Sticky Layer]

The sticky layer for bonding the support and the film mirror in the reflecting device for solar thermal power generation may be of any type. For example, the sticky layer may be formed using any of a dry laminating agent, a wet laminating agent, a sticky adhesive, a heat sealing agent, and a hot melt agent.

Typically, polyester resin, urethane resin, polyvinyl acetate resin, acrylic resin, nitrile rubber, or the like is used to form the sticky layer.

The lamination method is not restricted. In view of economy and productivity, for example, a continuous roll lamination method is preferably performed.

In view of adhesive effect, drying speed, and other properties, the sticky layer preferably has a thickness in the range of 1 to 50 µm generally.

Specifically, the sticky layer is preferably formed using a sticky agent such as "SK-Dyne series" manufactured by Soken Chemical & Engineering Co., Ltd., Oribain BPW series and BPS series" manufactured by TOYO INK CO., LTD., and "ARKON", "SUPER ESTER", or "HYPALE" all manufactured by Arakawa Chemical Industries, Ltd.

### [EXAMPLE 1]

Hereinafter, the invention is more specifically described with reference to examples, which however are not intended to limit the invention. In the examples, the term "parts" or "%" means "parts by weight" or "% by weight" unless otherwise stated.

### Example 1

### «Preparation of Reflecting Devices for solar Thermal Power Generation»

### [Preparation of Film Mirror for Solar Thermal Power Generation 1]

A biaxially-stretched polyester film (polyethylene terephthalate film, 100 µm in thickness) was used as a resin substrate. A resin mixture of a polyester resin, a melamine resin, a TDI-type isocyanate and an HMDI-type isocyanate (weight ratio of 20 : 1 : 1 : 2 in solid content of resin) was applied to one side of the polyethylene terephthalate film by a gravure coating method to form a 0.1-µm-thick anchor layer. An 80-nm-thick silver reflective layer was formed on the anchor layer by a vacuum deposition method. Tinuvin234 (manufactured by Ciba Japan K.K.) was added in an amount of 10% by weight (against the weight of solid content of resin) to a resin mixture of a polyester resin and a toluene diisocyanate resin (weight ratio 10:2 in solid content of resin). The resulting mixture was applied to the silver reflective layer by a gravure coating method to form a 0.1-µm-thick anti-corrosion layer.

Subsequently, a hard coat layer was formed on the anti-corrosion layer as follows. To a polysiloxane compound SARCoat NP720 (manufactured by DOKEN CO. , LTD.) were added 0.1% by weight (against the weight of solid content of resin) of ZX-049 (manufactured by Fuji Kasei Industries Ltd.) as a fluorine- based leveling agent, 1.0% by weight (against the weight of solid content of resin) of Tinuvin 477 (manufactured by Ciba Japan K.K.) as a triazine-based UV absorber, 0.1% by weight (against the weight of solid content of resin) of Irganox 1076 (manufactured by Ciba Japan K.K.) as an antioxidant, and 0.3% by weight (against the weight of solid content of resin) of PEP-36 (manufactured by ADEKA CORPORATION) as an antioxidant. The resulting mixture was applied to the anti-corrosion layer by gravure coating to form a 40-µm-thick wet coating. The coating was heat-treated at 80°C for 2 hours to form the hard coat layer, so that a film mirror for solar thermal power generation 1 was obtained.

### [Preparation of Film Mirror for Solar Thermal Power Generation 2]

A film mirror for solar thermal power generation 2 was prepared using the process of preparing the film mirror for solar thermal power generation 1, except that no antioxidant was added to the hard coat layer.

### [Preparation of Film Mirror for Solar Thermal Power Generation 3]

A film mirror for solar thermal power generation 3 was prepared using the process of preparing the film mirror for solar thermal power generation 1, except that an acrylic UV-curable resin LIODURAS LCH (manufactured by TOYO INK CO., LTD.) was used in place of the polysiloxane compound SARCoat NP720 when the hard coat layer was formed.

### [Preparation of Film Mirror for Solar Thermal Power Generation 4]

A film mirror for solar thermal power generation 4 was prepared using the process of preparing the film mirror for solar thermal power generation 3, except that no antioxidant was added to the hard coat layer.

### [Preparation of Film Mirror for Solar Thermal Power Generation 5]

A film mirror for solar thermal power generation 5 was prepared using the process of preparing the film mirror for solar thermal power generation 1, except that 0.5% by weight (against the weight of solid content of resin) of a low-molecular-weight triazine-based UV absorber Tinuvin 1577 (manufactured by Ciba Japan K.K.) was added in place of Tinuvin 477 to the hard coat layer.

### [Preparation of Film Mirror for Solar Thermal Power Generation 6]

A film mirror for solar thermal power generation 6 was prepared using the process of preparing the film mirror for solar thermal power generation 5, except that no antioxidant was added to the hard coat layer.

### [Preparation of Film Mirror for Solar Thermal Power Generation 7]

A film mirror for solar thermal power generation 7 was prepared using the process of preparing the film mirror for solar thermal power generation 5, except that an acrylic UV-curable resin LIODURAS LCH (manufactured by TOYO INK CO., LTD.) was used in place of the polysiloxane compound SARCoat NP720 when the hard coat layer was formed.

### [Preparation of Film Mirror for Solar Thermal Power Generation 8]

A film mirror for solar thermal power generation 8 was prepared using the process of preparing the film mirror for solar thermal power generation 6, except that an acrylic UV-curable resin LIODURAS LCH (manufactured by TOYO INK CO., LTD.) was used in place of the polysiloxane compound SARCoat NP720 when the hard coat layer was formed.

### [Preparation of Film Mirror for Solar Thermal Power Generation 9]

A film mirror for solar thermal power generation 9 was prepared using the process of preparing the film mirror for solar thermal power generation 1, except that 0.5% by weight (against the weight of solid content of resin) of a high-molecular-weight benzotriazole-based UV absorber PUVA-30M (Otsuka Chemical Co., Ltd.) was added in place of Tinuvin 477 to the hard coat layer.

### [Preparation of Film Mirror for Solar Thermal Power Generation 10]

A film mirror for solar thermal power generation 10 was prepared using the process of preparing the film mirror for solar thermal power generation 9, except that no antioxidant was added to the hard coat layer.

### [Preparation of Film Mirror for Solar Thermal Power Generation 11]

A film mirror for solar thermal power generation 11 was prepared using the process of preparing the film mirror for solar thermal power generation 9, except that an acrylic UV-curable resin LIODURAS LCH (manufactured by TOYO INK CO., LTD.) was used in place of the polysiloxane compound SARCoat NP720 when the hard coat layer was formed.

### [Preparation of Film Mirror for Solar Thermal Power Generation 12]

A film mirror for solar thermal power generation 12 was prepared using the process of preparing the film mirror for solar thermal power generation 10, except that an acrylic UV-curable resin LIODURAS LCH (manufactured by TOYO INK CO., LTD.) was used in place of the polysiloxane compound SARCoat NP720 when the hard coat layer was formed.

### [Preparation of Film Mirror for Solar Thermal Power Generation 13]

A film mirror for solar thermal power generation 13 was prepared using the process of preparing the film mirror for solar thermal power generation 1, except that 20.0% by weight (against the weight of solid content of resin) of titanium oxide nanoparticles STR-100A-LP with a particle size of 20 nm (manufactured by Sakai Chemical Industry Co., Ltd.) were added as an inorganic UV absorber in place of Tinuvin 477 to the hard coat layer.

### [Preparation of Film Mirror for Solar Thermal Power Generation 14]

A film mirror for solar thermal power generation 14 was prepared using the process of preparing the film mirror for solar thermal power generation 13, except that no antioxidant was added to the hard coat layer.

### [Preparation of Film Mirror for Solar Thermal Power Generation 15]

A film mirror for solar thermal power generation 15 was prepared using the process of preparing the film mirror for solar thermal power generation 13, except that an acrylic UV-curable resin LIODURAS LCH (manufactured by TOYO INK CO., LTD.) was used in place of the polysiloxane compound SARCoat NP720 when the hard coat layer was formed.

### [Preparation of Film Mirror for Solar Thermal Power Generation 16]

A film mirror for solar thermal power generation 16 was prepared using the process of preparing the film mirror for solar thermal power generation 14, except that an acrylic UV-curable resin LIODURAS LCH (manufactured by TOYO INK CO., LTD.) was used in place of the polysiloxane compound SARCoat NP720 when the hard coat layer was formed.

### [Preparation of Film Mirror for Solar Thermal Power Generation 17]

A film mirror for solar thermal power generation 17 was prepared using the process of preparing the film mirror for solar thermal power generation 1, except that 20.0% by weight (against the weight of solid content of resin) of zinc oxide nanoparticles FINEX-50W-LP2 with a particle size of 20 nm (manufactured by Sakai Chemical Industry Co., Ltd.) were added as an inorganic UV absorber in place of Tinuvin 477 to the hard coat layer.

### [Preparation of Film Mirror for Solar Thermal Power Generation 18]

A film mirror for solar thermal power generation 18 was prepared using the process of preparing the film mirror for solar thermal power generation 17, except that no antioxidant was added to the hard coat layer.

### [Preparation of Film Mirror for Solar Thermal Power Generation 19]

A film mirror for solar thermal power generation 19 was prepared using the process of preparing the film mirror for solar thermal power generation 17, except that an acrylic UV-curable resin LIODURAS LCH (manufactured by TOYO INK CO., LTD.) was used in place of the polysiloxane compound SARCoat NP720 when the hard coat layer was formed.

### [Preparation of Film Mirror for Solar Thermal Power Generation 20]

A film mirror for solar thermal power generation 20 was prepared using the process of preparing the film mirror for solar thermal power generation 18, except that an acrylic UV-curable resin LIODURAS LCH (manufactured by TOYO INK CO., LTD.) was used in place of the polysiloxane compound SARCoat NP720 when the hard coat layer was formed.

### [Preparation of Film Mirror for Solar Thermal Power Generation 21]

A film mirror for solar thermal power generation 21 was prepared using the process of preparing the film mirror for solar thermal power generation 1, except that 20.0% by weight (against the weight of solid content of resin) of cerium oxide nanoparticles CERIGUARDSC-6832 with a particle size of 20 nm (manufactured by DAITO KASEI KOGYO CO., LTD.) were added as an inorganic UV absorber in place of Tinuvin 477 to the hard coat layer.

### [Preparation of Film Mirror for Solar Thermal Power Generation 22]

A film mirror for solar thermal power generation 22 was prepared using the process of preparing the film mirror for solar thermal power generation 21, except that no antioxidant was added to the hard coat layer.

### [Preparation of Film Mirror for Solar Thermal Power Generation 23]

A film mirror for solar thermal power generation 23 was prepared using the process of preparing the film mirror for solar thermal power generation 21, except that an acrylic UV-curable resin LIODURAS LCH (manufactured by TOYO INK CO., LTD.) was used in place of the polysiloxane compound SARCoat NP720 when the hard coat layer was formed.

### [Preparation of Film Mirror for Solar Thermal Power Generation 24]

A film mirror for solar thermal power generation 24 was prepared using the process of preparing the film mirror for solar thermal power generation 22, except that an acrylic UV-curable resin LIODURAS LCH (manufactured by TOYO INK CO., LTD.) was used in place of the polysiloxane compound SARCoat NP720 when the hard coat layer was formed.

### [Preparation of Film Mirror for Solar Thermal Power Generation 25]

A film mirror for solar thermal power generation 25 was prepared using the process of preparing the film mirror for solar thermal power generation 1, except that 20.0% by weight (against the weight of solid content of resin) of iron oxide nanoparticles Concelight BP-10S with a particle size of 20 nm (manufactured by JGC Catalysts and Chemicals Ltd.) were added as an inorganic UV absorber in place of Tinuvin 477 to the hard coat layer.

### [Preparation of Film Mirror for Solar Thermal Power Generation 26]

A film mirror for solar thermal power generation 26 was prepared using the process of preparing the film mirror for solar thermal power generation 25, except that no antioxidant was added to the hard coat layer.

### [Preparation of Film Mirror for Solar Thermal Power Generation 27]

A film mirror for solar thermal power generation 27 was prepared using the process of preparing the film mirror for solar thermal power generation 25, except that an acrylic UV-curable resin LIODURAS LCH (manufactured by TOYO INK CO., LTD.) was used in place of the polysiloxane compound SARCoat NP720 when the hard coat layer was formed.

### [Preparation of Film Mirror for Solar Thermal Power Generation 28]

A film mirror for solar thermal power generation 28 was prepared using the process of preparing the film mirror for solar thermal power generation 26, except that an acrylic UV-curable resin LIODURAS LCH (manufactured by TOYO INK CO., LTD.) was used in place of the polysiloxane compound SARCoat NP720 when the hard coat layer was formed.

### [Preparation of Film Mirrors for Solar Thermal Power Generation 29 to 56]

Film mirrors for solar Thermal Power Generation 29 to 56 were prepared using the processes of preparing the film mirrors for solar thermal power generation 1 to 28, respectively, except that the heat treatment under the curing conditions of 80°C and 2 hours for hard coating was replaced by a curing process including performing UV irradiation using a UV conveyor (light source; high-pressure mercury lamp, illumination dose; 100 mW/cm²) and then performing an additional heat treatment at 80°C for 2 hours.

### [Preparation of Film Mirrors for Solar Thermal Power Generation 57 to 70]

Film mirrors for solar Thermal Power Generation 57 to 70 were prepared using the processes of preparing the film mirrors for solar thermal power generation 1, 3, 5,......, 23, 25, and 27 (the odd numbers between 1 and 28, including antioxidants), respectively, except that the UV absorbers, the hard coat resin composition and the antioxidants shown in Table 3 were used and that UV irradiation using a UV conveyor (light source; high-pressure mercury lamp, illumination dose; 100 mW/cm²) was only performed as the curing conditions for hard coating.

### [Preparation of Film Mirrors for Solar Thermal Power Generation 71 to 76]

Film mirrors for solar Thermal Power Generation 71 to 76 for solar thermal power generation were prepared using the processes of preparing the film mirrors for solar thermal power generation 1 and 3, respectively, except that no UV absorber was added, the hard coat resin composition and the antioxidants shown in Table 3 were used, and the following curing conditions were used.

When the film mirrors for Solar Thermal Power Generation for solar thermal power generation 71 and 72 were prepared, the curing was performed only by UV irradiation as in the preparation of the film mirrors for solar thermal power generation 57 to 70.

When the film mirrors for solar thermal power generation 73 and 74 were prepared, heat curing was performed as in the preparation of the film mirrors for solar thermal power generation 1 to 28.

When the film mirrors for solar thermal power generation 75 and 76 were prepared, curing by UV irradiation was followed by heat curing as in the preparation of the film mirrors for solar thermal power generation 29 to 56.

### «Evaluation of Reflecting Devices for Solar Thermal Power Generation»

The reflecting devices prepared as described above for solar thermal power generation were evaluated for scratch resistance after a heat-moisture treatment, for scratch resistance and anti-pollution properties after a UV degradation treatment, and for weather resistance by the methods described below.

### [Scratch Resistance After UV Degradation Treatment]

Each sample was subjected to ultraviolet irradiation in an environment at 63°C for 96 hours using I-Super UV Tester manufactured by Iwasaki Electro Co., Ltd. After the UV degradation treatment, the outermost surface layer of the film mirror of each sample was rubbed back-and-forth 10 times with steel wool of # 0000 under a load of 1 kg/cm² at a stroke of 100 mm and a rate of 30 mm/second and then evaluated for scratch resistance according to the following criteria.

⊙: The surface layer has no scratch.
○: The surface layer has 1 to 5 scratches.
Δ: The surface layer has 6 to 10 scratches.
×: The surface layer has more than 10 scratches.

### <Measurement of Regular Reflectance>

A spectrophotometer UV-265 manufactured by Shimadzu Corporation was modified with integrating sphere reflectance accessories, in which the angle of incident light was adjusted to 5° with respect to the normal to the reflective surface. The regular reflectance of each sample was measured at an angle of reflection of 5° using the modified meter. The average reflectance at wavelengths from 350 nm to 700 nm was determined for the evaluation.

### [Reflectance After UV Degradation Treatment]

Each sample was subjected to ultraviolet irradiation in an environment at 65°C for 7 days using I-Super UV Tester manufactured by Iwasaki Electric Co., Ltd. The regular reflectance of each sample was then measured by the method described above. The average regular reflectance after the ultraviolet irradiation was determined relative to the average regular reflectance before the ultraviolet irradiation, which was normalized as 100%. The resulting reflectance after the UV degradation treatment was evaluated according to the following criteria.

⊙: The average regular reflectance is 90% or more.
○: The average regular reflectance is 85% or more and less than 90%.
Δ: The average regular reflectance is 80% or more and less than 85%.
×: The average regular reflectance is less than 80%.

### [Anti-Pollution Properties]

Each sample was bonded to an aluminum substrate to form a reflecting device for solar thermal power generation. Each device was placed 1 m above the ground at an angle of 45° with the ground and allowed to stand for 1 month in a desert area whose environment was: daytime average temperature; 40°C, daytime dew-point temperature; 20°C, nighttime average temperature; 15°C, and nighttime dew-point temperature; 10°C. The reflectance of each device was then measured under the conditions shown above and the anti-pollution properties of each device were evaluated according the following criteria.

⊙: The average regular reflectance is 90% or more.
○: The average regular reflectance is 85% or more and less than 90%.
Δ: The average regular reflectance is 80% or more and less than 85%.
×: The average regular reflectance is less than 80%.

The evaluation results are shown in Tables 1 to 3.

**[Table 1-1]**

| Reflecting device for solar thermal power generation No. | Hard coat curing method | UV absorber type | Hard coat resin composition | Presence or absence of antioxidant | Evaluation | | | Note |
|---|---|---|---|---|---|---|---|---|
| | | | | | Steel wool test after UV tester | Reflectance after UV tester | Anti-pollution properties | |
| 1 | Heat curing | Tinuvin 477: low-molecular-weight triazine | Polysiloxane | Present | ⊙ | ⊙ | ⊙ | Invention |
| 2 | | | | Absent | ⊙ | ○ | ○ | Invention |
| 3 | | | Acrylic | Present | ○ | ○ | ⊙ | Invention |
| 4 | | | | Absent | ○ | Δ | ○ | Invention |
| 5 | | Tinuvin 1577: low-molecular-weight triazine | Polysiloxane | Present | ⊙ | ⊙ | ⊙ | Invention |
| 6 | | | | Absent | ⊙ | ○ | ○ | Invention |
| 7 | | | Acrylic | Present | ○ | ○ | ⊙ | Invention |
| 8 | | | | Absent | ○ | Δ | ○ | Invention |
| 9 | | ULS 1635: high-molecular-weight benzotriazole | Polysiloxane | Present | ⊙ | ⊙ | ⊙ | Invention |
| 10 | | | | Absent | ⊙ | ○ | ○ | Invention |
| 11 | | | Acrylic | Present | ○ | ○ | ⊙ | Invention |
| 12 | | | | Absent | ○ | Δ | ○ | Invention |
| 13 | | Titanium oxide | Polysiloxane | Present | ⊙ | ⊙ | ⊙ | Invention |
| 14 | | | | Absent | ⊙ | ○ | ○ | Invention |
| 15 | | | Acrylic | Present | ○ | ○ | ⊙ | Invention |
| 16 | | | | Absent | ○ | Δ | ○ | Invention |

**[Table 1-2]**

| Reflecting device for solar thermal power generation No. | Hard coat curing method | UV absorber type | Hard coat resin composition | Presence or absence of antioxidant | Evaluation | | | Note |
|---|---|---|---|---|---|---|---|---|
| | | | | | Steel wool test after UV tester | Reflectance after UV tester | Anti-pollution properties | |
| 17 | Heat curing | Zinc oxide | Polysiloxane | Present | ⊙ | ⊙ | ⊙ | Invention |
| 18 | | | | Absent | ⊙ | ○ | ○ | Invention |
| 19 | | | Acrylic | Present | ○ | ○ | ⊙ | Invention |
| 20 | | | | Absent | ○ | Δ | ○ | Invention |
| 21 | | Cerium oxide | Polysiloxane | Present | ⊙ | ⊙ | ⊙ | Invention |
| 22 | | | | Absent | ⊙ | ○ | ○ | Invention |
| 23 | | | Acrylic | Present | ○ | ○ | ⊙ | Invention |
| 24 | | | | Absent | ○ | Δ | ○ | Invention |
| 25 | | Iron oxide | Polysiloxane | Present | ⊙ | ⊙ | ⊙ | Invention |
| 26 | | | | Absent | ⊙ | ○ | ○ | Invention |
| 27 | | | Acrylic | Present | ○ | ○ | ⊙ | Invention |
| 28 | | | | Absent | ○ | Δ | ○ | Invention |

**[Table 2-1]**

| Reflecting device for solar thermal power generation No. | Hard coat curing method | UV absorber type | Hard coat resin composition | Presence or absence of antioxidant | Evaluation | | | Note |
|---|---|---|---|---|---|---|---|---|
| | | | | | Steel wool test after UV tester | Reflectance after UV tester | Anti-pollution properties | |
| 29 | Heat curing after UV curing | Tinuvin 477: low-molecular-weight triazine | Polysiloxane | Present | ⊙ | ⊙ | ⊙ | Invention |
| 30 | | | | Absent | ⊙ | ○ | ○ | Invention |
| 31 | | | Acrylic | Present | ○ | ○ | ⊙ | Invention |
| 32 | | | | Absent | ○ | Δ | ○ | Invention |
| 33 | | Tinuvin 1577: low-molecular-weight triazine | Polysiloxane | Present | ⊙ | ⊙ | ⊙ | Invention |
| 34 | | | | Absent | ⊙ | ○ | ○ | Invention |
| 35 | | | Acrylic | Present | ○ | ○ | ⊙ | Invention |
| 36 | | | | Absent | ○ | Δ | ○ | Invention |
| 37 | | ULS 1635: high-molecular-weight benzotriazole | Polysiloxane | Present | ⊙ | ⊙ | ⊙ | Invention |
| 38 | | | | Absent | ⊙ | ○ | ○ | Invention |
| 39 | | | Acrylic | Present | ○ | ○ | ⊙ | Invention |
| 40 | | | | Absent | ○ | Δ | ○ | Invention |
| 41 | | Titanium oxide | Polysiloxane | Present | ⊙ | ⊙ | ⊙ | Invention |
| 42 | | | | Absent | ⊙ | ○ | ○ | Invention |
| 43 | | | Acrylic | Present | ○ | ○ | ⊙ | Invention |
| 44 | | | | Absent | ○ | Δ | ○ | Invention |

**[Table 2-2]**

| Reflecting device for solar thermal power generation No. | Hard coat curing method | UV absorber type | Hard coat resin composition | Presence or absence of antioxidant | Evaluation | | | Note |
|---|---|---|---|---|---|---|---|---|
| | | | | | Steel wool test after UV tester | Reflectance after UV tester | Anti-pollution properties | |
| 45 | Heat curing after UV curing | Zinc oxide | Polysiloxane | Present | ⊙ | ⊙ | ⊙ | Invention |
| 46 | | | | Absent | ⊙ | ○ | ○ | Invention |
| 47 | | | Acrylic | Present | ○ | ○ | ⊙ | Invention |
| 48 | | | | Absent | ○ | Δ | ○ | Invention |
| 49 | | Cerium oxide | Polysiloxane | Present | ⊙ | ⊙ | ⊙ | Invention |
| 50 | | | | Absent | ⊙ | ○ | ○ | Invention |
| 51 | | | Acrylic | Present | ○ | ○ | ⊙ | Invention |
| 52 | | | | Absent | ○ | Δ | ○ | Invention |
| 53 | | Iron oxide | Polysiloxane | Present | ⊙ | ⊙ | ⊙ | Invention |
| 54 | | | | Absent | ⊙ | ○ | ○ | Invention |
| 55 | | | Acrylic | Present | ○ | ○ | ⊙ | Invention |
| 56 | | | | Absent | ○ | Δ | ○ | Invention |

**[Table 3-1]**

| Reflecting device for solar thermal power generation No. | Hard coat curing method | UV absorber type | Hard coat resin composition | Presence or absence of antioxidant | Evaluation | | | Note |
|---|---|---|---|---|---|---|---|---|
| | | | | | Steel wool test after UV tester | Reflectance after UV tester | Anti-pollution properties | |
| 57 | UV curing | Tinuvin 477: low-molecular-weight triazine | Polysiloxane | Present | × | × | × | Comparative |
| 58 | | | Acrylic | Present | × | Δ | × | Comparative |
| 59 | | Tinuvin 1577: weight triazine | Polysiloxane | Present | × | × | × | Comparative |
| 60 | | | Acrylic | Present | × | Δ | × | Comparative |
| 61 | | ULS 1635: high-weight benzotriazole | Polysiloxane | Present | × | × | × | Comparative |
| 62 | | | Acrylic | Present | × | Δ | × | Comparative |
| 63 | | Titanium oxide | Polysiloxane | Present | × | × | × | Comparative |
| 64 | | | Acrylic | Present | × | Δ | × | Comparative |
| 65 | | Zinc oxide | Polysiloxane | Present | × | × | × | Comparative |
| 66 | | | Acrylic | Present | × | Δ | × | Comparative |
| 67 | | Cerium oxide | Polysiloxane | Present | × | × | × | Comparative |
| 68 | | | Acrylic | Present | × | Δ | × | Comparative |
| 69 | | Iron oxide | Polysiloxane | Present | × | × | × | Comparative |
| 70 | | | Acrylic | Present | × | Δ | × | Comparative |
| 71 | | None | Polysiloxane | Present | × | × | × | Comparative |
| 72 | | | Acrylic | Present | × | × | × | Comparative |

**[Table 3-2]**

| Reflecting device for solar thermal power generation No. | Hard coat curing method | UV absorber type | Hard coat resin composition | Pretence or absence of antioxidant | Evaluation | | | Note |
|---|---|---|---|---|---|---|---|---|
| | | | | | Steel wool test after UV tester | Reflectance after UV tester | Anti-pollution properties | |
| 73 | Heat curing | Absent | Polysiloxane | Present | Δ | Δ | Δ | Comparative |
| 74 | | | Acrylic | Present | Δ | Δ | Δ | Comparative |
| 75 | Heat curing after UV curing | Absent | Polysiloxane | Present | Δ | Δ | Δ | Comparative |
| 76 | | | Acrylic | Present | Δ | Δ | Δ | Comparative |

Tables 1 to 3 show that the film mirrors for solar thermal power generation 1 to 56 according to the invention are highly resistant to steel wool after the UV degradation treatment because they each have a hard coat layer made of a UV absorber-containing resin material cured by a process including a heating step. In the film mirrors for solar thermal power generation according to the invention, the hard coat layer made of a polysiloxane-based composition is more resistant to steel wool than that made of the acrylic composition, after the UV degradation treatment, because the polysiloxane-based composition itself has higher weather resistance. It is also apparent that when the film mirror for solar thermal power generation according to the invention contains an antioxidant, UV degradation treatment-induced yellowing of the hard coat layer is suppressed, and this makes it possible to suppress the reduction in reflectance after the UV degradation treatment and to make the film mirror more resistant to being scratched caused by oxidation/degradation of resin, so that scratch-induced adhesion of dirt can also be suppressed.

In contrast, the film mirrors for solar thermal power generation 57 to 76, which have a hard coat layer cured only by UV curing, have very low resistance to steel wool after the UV degradation treatment. In this regard, it is concluded that the hard coat layer of each of the film mirrors for solar thermal power generation 1 to 56 according to the invention can maintain high hardness because it is cured by a curing process including a heating step, so that polymerization reaction of the monomers are almost completed before the UV degradation treatment. It is also concluded that in contrast, the hard coat layer cured only by UV curing contains unreacted monomer residues, and when the UV degradation treatment is performed on the hard coat layer in such a state, the unreacted monomer residues are subjected to polymerization again to form a cluster, so that stress is produced between the cluster and the resin arranged around the cluster to form the hard coat layer, which significantly reduces the resistance to steel wool.

It is also apparent that the hard coat layer containing no UV absorber, such as the hard coat layer of each of the comparative film mirrors for solar thermal power generation 73 to 76, cannot be sufficiently prevented from being scratched after the UV degradation treatment even when it is made of a resin material cured by a process including a heating step.

### Industrial Applicability

The invention having the features described above is applicable to film mirrors for solar thermal power generation and also to film mirror-equipped reflecting devices for solar thermal power generation.

### Reference Signs List

- 1: Substrate
- 2: Anchor layer
- 3: Reflective layer
- 4: Anti-corrosion layer
- 5: Adhesive layer
- 6: Optically-transparent resin layer
- 7: Hard coat layer
- 10: Film mirror for solar thermal power generation
- 11: Film mirror for solar thermal power generation

## Claims

1. A film mirror for solar thermal power generation, comprising:
a hard coat layer at an outermost surface of a transparent resin layer, and
a metallic reflective layer,
wherein the hard coat layer comprises a UV absorber and a resin cured by a process comprising a heating step.

2. The film mirror for solar thermal power generation according to claim 1, wherein the metallic reflective layer is made of silver.

3. The film mirror for solar thermal power generation according to claim 1 or 2, wherein the hard coat layer is formed by a thermosetting resin composed of a polysiloxane-based compound.

4. The film mirror for solar thermal power generation according to any one of claims 1 to 3, wherein the UV absorber is at least one selected from a group consisting of a low-molecular-weight triazine-based UV absorber, a high-molecular-weight benzotriazole-based UV absorber, titanium oxide, zinc oxide, cerium oxide and iron oxide.

5. The film mirror for solar thermal power generation according to any one of claims 1 to 4, wherein the hard coat layer comprises an antioxidant.

6. A reflecting device for solar thermal power generation, wherein the reflecting device is manufactured by bonding the film mirror for solar thermal power generation according to any one of claims 1 to 5 to a support with a sticky layer interposed therebetween.
